(19) Europäisches Patentamt
European Patent Office
Office européen des brevets

(11) EP 1 997 214 B1

(12) EUROPÄISCHE PATENTSCHRIFT

(45) Veröffentlichungstag und Bekanntmachung des Hinweises auf die Patenterteilung:
**02.12.2015 Patentblatt 2015/49**

(21) Anmeldenummer: **07704177.0**

(22) Anmeldetag: **26.01.2007**

(51) Int Cl.:
*H02K 21/24* (2006.01)      *H02K 41/03* (2006.01)
*H02K 16/00* (2006.01)

(86) Internationale Anmeldenummer:
**PCT/EP2007/050787**

(87) Internationale Veröffentlichungsnummer:
**WO 2007/107399 (27.09.2007 Gazette 2007/39)**

(54) **ELEKTRISCHE MASCHINE INSBESONDERE EIN GENERATOR**

ELECTRICAL MACHINE, IN PARTICULAR A GENERATOR

MACHINE ÉLECTRIQUE NOTAMMENT GÉNÉRATEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.03.2006 DE 102006013590**

(43) Veröffentlichungstag der Anmeldung:
**03.12.2008 Patentblatt 2008/49**

(73) Patentinhaber: **Siemens Aktiengesellschaft 80333 München (DE)**

(72) Erfinder:
• **HOPPE, Thomas 32657 Lemgo (DE)**
• **WOLLENBERG, Johannes 82166 Gräfelfing (DE)**

(56) Entgegenhaltungen:
**EP-A1- 0 373 987      EP-A2- 0 627 805
WO-A-2004/017497      WO-A-2005/088812
WO-A-2006/052173      DE-A1- 19 636 591
DE-A1- 19 652 673      US-A- 5 315 159**

**Beschreibung**

Die Erfindung betrifft eine elektrische Maschine gemäß dem Oberbegriff des Patentanspruchs 1, insbesondere einen Generator, wobei der Generator bei einer Windkraftanlage eingesetzt ist. Die elektrische Maschine weist ein Primärteil und ein Sekundärteil auf, wobei sowohl das Primärteil als auch das Sekundärteil eine kreisförmige Kontur aufweisen. Der Generator, welcher bei einer Windkraftanlage eingesetzt wird ist ein Windkraftgenerator. Zur Energiegewinnung aus Windkraft werden Windkraft-generatoren als mechanisch/elektrische Energiewandler eingesetzt. Der Einbau dieser Generatoren erfolgt üblicherweise in großen Höhen. Des Weiteren kann der Einsatz der Windkraftanlage am Land, an der Küste oder auch auf See erfolgen.

Windkraftgeneratoren weisen derzeit zwei große Bauteile auf, welche gemeinsam oder separat zu montieren sind. Dies ist ein Stator und ein Rotor. Beide Bauteile weisen eine zylindrische Grundform auf. Der Windkraftgenerator - kurz Generator genannt - wird dabei gemäß den gegebenen und/oder erwarteten Windverhältnissen und gemäß einer gewünschten Leistung als ein Aggregat dimensioniert. Dieses Aggregat ist sehr groß und schwer. Montage, Wartung und Instandsetzung erfordern schweres und teures Gerät, wie z.B. Lasthubschrauber oder -kräne.

Das Dokument WO 2004/017497 A1 beschreibt einen Generator, insbesondere für den Einsatz bei Windkraftanlagen oder Wasserkrafträdern mit niedriger Drehzahl. Zur Verbesserung des Wirkungsgrades und Leistungssteigerung wird ein Scheibenläufergenerator vorgeschlagen, bei dem die korrespondierenden Magnete und bewickelten Ringkerne in Axialrichtung auf jeweils einen Kreisring liegend angeordnet sind, deren mittlerer Radius annähernd gleichgehalten ist. Hierdurch kann die effektiv nutzbare Fläche für einen Magnetfluss bei einem Generator wesentlich vergrößert und damit die Leistung bei niedrigen Drehzahlen erhöht werden. Der Aufbau des Generators erfolgt zudem in einer Modulbauweise, die sehr montagefreundlich ist und einen erleichterten Austausch von defekten einzelnen Kreisringsegmenten mit Wicklungen jederzeit ermöglicht. Darüber hinaus kann durch Anpassung der Ringkerngröße und die der verwendeten Permanentmagnete eine weitere Leistungssteigerung erzielt werden, weil bevorzugt die Radialflächen der Magnete und Ringkernwicklungen mit einer magnetischen Flussrichtung in Axialrichtung eingesetzt werden.

Die DE 196 36 591 A1 schlägt bei einem Generator für getriebelose Windenergiekonverter als permanentmagneterregter Synchrongenerator hoher Polzahl vor, den Generator als Außenläufer auszuführen, wobei das innenliegende Ständerpaket mit der Ständerwicklung auf Kühlrippen sitzt, welche gleichzeitig die im Generatorluftspalt erzeugten Generatorlasten auf den Turmkopf übertragen und dabei Kühlkanäle bilden, die von der anströmenden Umgebungsluft ungehindert durchströmt werden.

Die EP 0 627 805 A2 beschreibt eine elektromagnetische Maschine die geeignet ist zur Verwendung als ein direkt angetriebener, direkt gekoppelter, Netzspannungsgenerator, der durch eine Niedergeschwindigkeitsvorrichtung, wie eine Windturbine angetrieben werden kann. Die elektrische Maschine besteht aus einem oder mehrerer Rotorringe vieler Permanentmagnete wechselnder Polarität mit koaxialen Statorringen aus vielen laminierten Joche, wobei jedes Joch Schlitze zum Platzieren von Spulen festlegt. Die Joche und Spulen formen Module, die durch Träger relativ zu den Rotorringen abgestützt sind. Die Rotorringe können auch eine modulare Konstruktion aufweisen. Dadurch werden Herstellung und Montage vereinfacht und subharmonische Magnetflusskomponenten unterdrückt. Eine Folge der großen Anzahl von Polen in jedem ersten Ring ist, dass die Magnetflusspfade innerhalb des zweiten Rings lokalisiert sind. Die Joche können daher leicht voneinander durch nichtmagnetisches Material beabstandet sein, ohne größere Störungen des Flusses zu verursachen. Daher können die Joche eine E-Form mit einer flachen Oberfläche aufweisen, in welcher die Schlitze definiert sind (So ist die den Magnetpolen zugewandte Oberfläche tatsächlich polygonal). Jedes Joch könnte eine unterschiedliche Anzahl von Schlitzen definieren, zum Beispiel jedes Joch könnte vier Längsschlitze definieren, um zwei Spulen zu platzieren (so ersetzt jedes Joch zwei benachbarte Joche des Generators). Ferner könnte die Fläche des Jochs, in dem die Schlitze festgelegt sind, gekrümmt sein, so dass die Innenfläche des Ringes sich mehr dem zylindrischen annähert.

Die EP 0 373 987 A1 beschreibt zwei verschiedene Aktuatortypen mit starker magnetischer Schiebekraft. Bei dem ersten Typ ist ein Permanentmagnet in den jeweiligen Nuten eingeschoben, die durch die hervorstehenden Abschnitte des Primärmagnetteils gebildet sind. Das Primärmagnetteil weist auch isolierte Drähte auf mit denen, wie in EP 0 373 987 A1 beschrieben, ein magnetischer Fluss erzeugt werden kann. Bei dem zweiten Typ ist ein Permanentmagnet in den jeweiligen Nuten eingeschoben, die durch die hervorstehenden Abschnitte des Sekundärmagnetteils gebildet sind. Mit den isolierten Drähten eines Primärmagnetteils kann, wie in EP 0 373 987 A1 beschrieben, ein magnetischer Fluss erzeugt werden. Die EP 0 373 987 A1 beschreibt hierzu Linearpulsmotoren und Pulsmotoren vom Scheibenrotortyp oder Außenrotortyp. In den beiden äußeren Seitenflächen der scheibenförmigen Rotoren sind rechtwinklige Zähne und Ausnehmungen einander abwechselnd mit konstantem Abstand entlang eines konzentrischen Kreises gebildet, dessen Radius im Zwischenraum zwischen dem äußeren Bogen und dem inneren Bogen der rechtwinkligen Zähne verläuft, wobei jede radiale Achse der rechtwinkligen Zähne den konzentrischen Kreis schneidet. Die Seiten der Ausnehmungen sind so ausgerichtet, dass sie auf einer Linie liegen, die in einer radialen Richtung des Rotors verläuft. Die Statoren weisen einen Kern vom Ringtyp auf. Spulen, die um den Kern in konstanten Intervallen gewickelt sind, bilden magnetische Pole, wobei diese Magnetpole Segmente und Ausnehmungen aufweisen, die mit einem konstanten Abstand entlang eines konzentrischen Kreises gebildet sind, dessen Radius im Zwischenraum zwischen dem äußeren Bogen und dem inneren Bogen der Segmente verläuft, wobei jede radiale Achse der Segmente den konzentrischen Kreis schneidet. Permanentmagnete sind entweder in den Ausnehmungen des Rotors oder des Stators eingesetzt, so dass jeder der benachbarten Permanentmagnete von einer entgegengesetzten Polarität ist.

Die US 6 087 742 beschreibt einen Hybridlinearmotor.

Die DE 196 52 673 A1 beschreibt eine Windkraftanlage zur Stromerzeugung, umfassend einen Turm, eine Gondel, einen Rotor mit Rotorblättern, mindestens eine Antriebswelle, eine Steuereinheit und eine mehrere Generatoren umfassende Generatoreinheit, wobei die Steuereinheit das wahlweise Zuschalten einzelner Generatoren ermöglicht, wobei die Generatoreinheit modular aufgebaut ist und ihre Generatormodule koaxial auf der Antriebswelle angeordnet sind.

Die US 5 315 159 beschreibt eine Windturbine zur Erzeugung elektrischer Energie mit Hilfe von Windenergie, mit einem auf einem Mast montierbaren und um eine Rotorwelle mit einen oder mehreren Rotorblättern drehbaren Turbinenrotor und einem mit einem Läufer und einem Ständer ausgestatteten Generator. Der Generator ist eine Sektormaschine des Asynchron-Typs, dessen Stator eine oder mehrere diskrete Statorsektoren aufweist und dessen Rotor in einer kontinuierlichen, ununterbrochenen Ringform ist und direkt an den Turbinenrotor gekoppelt ist (hat die gleichen Winkelgeschwindigkeit wie der Turbinenrotor). Der eine oder die mehreren diskreten Statorsektoren erstrecken sich nur gegenüber einem kleinen Teil des ringförmigen Generator-Rotor, dessen Drehbewegung stets in einer Richtung ist. Jeder diskrete Statorsektor hat zwei Statorhälften, die an den Schenkeln eines an dem Mast montierten U-förmigen Halters befestigt sind und die zwischen sich einen Luftspalt definieren. Jede Statorhälfte enthält einen halben Plattenstapel mit Schlitzen für die Spulenwicklungen, wobei jede einzelne Platte von diesen eine einzelne kreissegmentförmige Platte ist. Der ringförmige Generator-Rotor verläuft kontinuierlich in den Luftspalt zwischen den beiden Statorhälften jedes diskreten Statorsektors.

Die Veröffentlichung WO 2006/052173 A1 ist Stand der Technik nach Artikel 54 (3) des EPÜ. Die WO 2006/052173 A1 beschreibt eine rotierende Transversalflussmaschine, die einen ersten zusammenwirkenden Teil mit einer elektrischer Wicklung aufweist und einen zweiten zusammenwirkenden Teil mit einer Vielzahl von Magnetpolen aufweist, wobei der erste und zweite zusammenwirkende Teile beweglich. Die rotierende Transversalflussmaschine weist einen zylinderförmigen Luftspalt auf. Die WO 2006/052173 A1 beschreibt außerdem eine lineare Transversalflussmaschine, die als zusammenwirkende Teile einen Stator und einen in der Richtung des gezeigten Pfeiles bewegbaren Rotor aufweist. Der Stator und der Rotor sind durch einen Luftspalt voneinander getrennt, wobei das zweite zusammenwirkende Teil ein Rotorrücken zum magnetischen Verbinden der Permanentmagnete in Linien senkrecht zu der Bewegung umfassen kann.

Die WO 2005/088812 A1 beschreibt einen Motor mit Gleichstromversorgung. Der Motor ist in Größe und Gewicht durch einen einfachen Aufbau reduziert, wobei niedrigere Produktionskosten zu erwarten sind. Ein Permanentmagnet wird als ein elektromagnetisches Element auf einer beweglichen Seite verwendet, um eine lineare Magnetpolreihe oder ein ringförmige Magnetpolreihe mit abwechselnd angeordneten N-Pole und S-Pole zu bilden. Zwei Sätze von kernlosen Leitern rechteckiger Wellenform sind als ein elektromagnetisches Element auf einer feststehenden Seite vorgesehen. Jedes Mal, wenn eine magnetische Polreihe um eine halbe Teilung verschoben wird, wird die Energiezufuhr von der einen zur anderen der genannten zwei Sätze von wellenförmigen Leitern geschaltet. Die Hauptanwendung ist bei Baubeschlägen, Transportvorrichtungen im Allgemeinen, usw. als Linearmotor und bei einer Vielzahl von elektronischen Geräten und Home-Anwendungen elektrischer Geräte als Rotationsmotor.

Aufgabe der vorliegenden Erfindung ist es, eine elektrische Maschine anzugeben, welche sowohl einen kompakten Aufbau aufweist wie auch flexibel einsetzbar ist. Der Einsatz betrifft insbesondere den Einsatz als Windkraftgenerator bei einer Windkraftanlage.

Die Lösung dieser Aufgabe gelingt mittels einer elektrischen Maschine mit den Merkmalen nach Anspruch 1, bzw. bei einem Windkraftgenerator nach Anspruch 11, bzw. auch bei einer Windkraftanlage nach Anspruch 16 oder 17.

Weitere vorteilhafte Ausgestaltungen der elektrischen Maschine, des Windkraftgenerators bzw. der Windkraftanlage ergeben sich aus den Merkmalen gemäß der abhängigen Ansprüche 2 bis 10 und 12 bis 15.

Eine elektrische Maschine, welche insbesondere ein Generator ist, wobei die die elektrische Maschine ein Primärteil und ein Sekundärteil aufweist, ist derart ausbildbar, dass die elektrische Maschine ein scheibenartiges Primärteil und ein scheibenartiges Sekundärteil zur Ausbildung eines scheibenförmigen Luftspalts aufweist oder dass die elektrische Maschine ein zylinderartiges Primärteil und ein zylinderartiges Sekundärteil zur Ausbildung eines zylinderförmigen Luftspalts aufweist, wobei zur Ausbildung des zylinderartigen Primärteils ein für einen Linearmotor verwendbares Primärteil mit verwandt ist. Weist die elektrische Maschine ein scheibenartiges Primärteil und ein scheibenartiges Sekundärteil auf, so können das scheibenartige Primärteil und das scheibenartige Sekundärteil derart zueinander angeordnet werden, dass dadurch ein scheibenartiger Luftspalt zwischen dem Primärteil und dem Sekundärteil ausgebildet wird. Der scheibenartige Aufbau der elektrischen Maschine unterscheidet sich dadurch von einem zylinderförmigen Aufbau einer elektrischen Maschine, dass zwar immer noch eine Rotationsbewegung durch die elektrische Maschine ausführbar ist, jedoch die magnetischen Felder über den Luftspalt keine radiale Ausrichtung zur Drehachse hin erfahren, sondern eine Ausrichtung parallel zur Drehachse der elektrischen Maschine. Die derart ausgebildete scheibenförmige elektrische Maschine ist vergleichbar mit einem Linearmotor, welcher auf eine Kreisbahn gezwungen ist.

Die elektrische Maschine ist insbesondere vom Typ einer Synchronmaschine. Synchronmaschinen können selbst erregt oder auch fremd erregt sein. Generatoren sind typischer Weise Synchronmaschinen.

In einer Ausgestaltung weist:

a) das Primärteil der elektrischen Maschine Primärteilsegmente aufweist und/oder
b) das Sekundärteil der elektrischen Maschine Sekundärteilsegmente aufweist,

wobei insbesondere die Primärteilsegmente Wicklungen aufweisen, wobei insbesondere zur Ausbildung des scheibenartigen Primärteils ein für einen Linearmotor verwendbares Primärteil mit verwandt ist.

Das Primärteil weist also bestrombare Wicklungen auf, wobei diese Wicklungen vorteilhafterweise in einem Bereich des Primärteils angeordnet sind, welche in Bezug auf die Scheibenform einen Außenbereich der Scheibe darstellen. Somit ist ein großes Moment erzielbar. Entsprechendes gilt für die das Sekundärteil ausbildenden Teile. Das Sekundärteil weist beispielsweise Permanentmagnete auf, welche im gleichen Radiusbereich wie die Wicklungen des Primärteils auf dem Sekundärteil positioniert sind. Weist das Sekundärteil anstelle der Permanentmagnete lediglich Mittel zur Führung eines magnetischen Feldes auf, wobei dieses Mittel eine Zahnstruktur aufweist, so ist auch diese Zahnstruktur derart auf dem Sekundärteil positioniert, dass die Zahnstruktur dem Teil des Primärteils gegenüberliegt, welches zur Ausbildung der elektromagnetischen Felder vorgesehen ist.

Die Scheibenförmige Bauweise ermöglicht einen besonders kompakten Aufbau. Des Weiteren ermöglicht die Verwendung von Primärteilen, welche zum Einsatz in einem Linearmotor vorsehbar sind einen flexiblen Aufbau der elektrischen Maschine. Dies gelingt insbesondere deswegen, weil derartige Primärteile elektrischer Linearmotoren zur Einzelmontage bzw. zum Einzelanschluss vorgesehen sind.

Die scheibenförmigen Ausbildungen der elektrischen Maschine bzw. die sich daraus ergebende kreisförmige Kontur des Primärteils bzw. Sekundärteils und die entsprechende kreisförmige Anordnung der Segmente durch eine polygonartige Positionierung betrifft stets den Bereich des Luftspaltes der elektrischen Maschine. Die elektrische Maschine, welche beispielsweise ein Gehäuse aufweist, kann bezüglich ihres Gehäuses unterschiedliche Konturen und Gestaltungsformen aufweisen, die sowohl kreisförmig, rechteckig oder auch eine andere Form aufweisen.

Das bzw. die Primärteilsegmente zur Ausbildung des Primärteils der elektrischen Maschine weisen insbesondere einen eigenen elektrischen Anschluß auf. Darüber hinaus können einzelne Primärteilsegmente über lösbare Verbindungen wie z.B. Schraubverbindungen, Klemmverbindungen oder dergleichen leicht montiert bzw. demontiert werden. Hierfür weist das Primärteilsegment insbesondere Löcher zur Durchführung einer Schraube auf. In einer weiteren Ausgestaltung des Primärteilsegmentes weist dieses einen eigenen Verguß auf. Die im Blechpaket des Primärteilsegmentes verlegten Wicklungen sind also vergossen. Dies ist typisch für ein Primärteil eines Linearmotors.

Im Gegensatz zu einer klassischen elektrischen Maschine, bei welcher der Stator und der Rotor jeweils ein Bauteil sind, weist die elektrische Maschine vorteilhaft ein Primärteil auf, welches aus einer Mehrzahl von Linearmotor/generator-Komponenten aufgebaut ist. Die Linearmotor/generator-Komponenten, welche die Segmente des Primärteils bzw. des Sekundärteis darstellen, können dabei vorteilhaft an einem beliebigen, vorteilhaft nicht zu kleinen, Durchmesser eines durch Windkraft in Rotation versetzten Bauteils angebracht werden. Dieses durch Windkraft in Rotation versetzbares Bauteil weist beispielsweise einen Flügel auf. Das Sekundärteil ist beispielsweise auf einem beweglichen Teil angebracht, wobei dieses das in Rotation versetzbare Bauteil ist. Das Primärteil ist dann entsprechend auf einem dazu feststehenden Bauteil angebracht.

Die elektrische Maschine ist damit vorteilhaft aus mehreren Einzelsegmenten aufbaubar. Der Luftspalt der elektrischen Maschine kann dabei entweder scheiben- oder zylinderförmig gestaltet sein.

Die Segmente des Primärteils, also die Primärteilsegmente sind Aktivteile der elektrischen Maschine, wobei diese wie obig beschrieben vorteilhaft denen eines herkömmlichen Linearmotors gleichen. Dieser herkömmliche Linearmotor kann beispielsweise gerade oder auch quaderförmig ausgebildet sein. Um die Leistung der elektrischen Maschine zu erhöhen, kann auch eine Doppelkammausführung vorgesehen sein.

Weist die elektrische Maschine einen großen Durchmesser auf, wobei es sich dabei um Durchmesser von > 1 m oder auch von > 2 und mehr Metern handelt, können insbesondere bei einem zylindrisch aufgebauten Motor auch herkömmliche Linearmotor-Sekundärteile (gerade, quaderförmig) verwendet werden ohne dass die Verluste zu groß werden. Dies ist dadurch bedingt, dass die Luftspaltänderungen aufgrund von Sehnenbildung sich nicht signifikant auf die Leistung der elektrischen Maschine auswirken.

Um die Leistungsausbeute zu optimieren ist es in einer vorteilhaften Abwandlung des Primärteils eines herkömmlichen Linearmotors möglich das Primärteilsegment mit einer gebogenen Form auszuführen. Die gebogene Form betrifft insbesondere die Seite des Primärteilsegmentes, welche dem Luftspalt zugewandt ist. Durch die gebogene Form ist in einfacher Weise ein zylindrischer Aufbau der elektrischen Maschine möglich. Die gebogene Form wird insbesondere dadurch erreicht, dass das Blechpaket des Primärteilsegmentes eine gebogene Form aufweist. Durch eine Aneinanderreihung mehrere Primärteilsegmente in gebogener Form ergibt sich eine Kreisform.

Das Sekundärteil der elektrischen Maschine ist als ein Passivteil ausführbar, wobei auch diese abhängig von der Größe des Durchmessers und abhängig von der Aufbauform (zylindrisch oder scheibenförmig) entsprechend dem Primärteil gebogen ist. Zur Steigerung der Leistung der elektrischen Maschine und/oder zur Neutralisierung der nach außen wirkenden Anziehungskräfte zwischen den Primär- und Sekundärteil kann die elektrische Maschine mit dem scheibenförmigen Luftspalt als sog. Doppelkamm aufgebaut sein.

Des Weiteren kann zur Steigerung der abgebbaren Leistung der elektrischen Maschine und/oder zur Trennung der Funktionen "Anlauf", "Schnelllauf" o.ä. aus verschiedenen Primärteilsegmenten aufgebaut werden, welche an unterschiedlichen Durchmessern bzw. Radien angebracht sind. Hieraus ergibt sich eine ineiander geschachtelte Anordnung von Primärteilsegmenten und auch von deren zugehörigen Sekundärteilen.

Das Sekundärteil der elektrischen Maschine kann einstückig oder auch mehrstückig, also segmentiert, ausgebildet sein.

Ein baukastenmäßiger segmentierter Aufbau der elektrischen Maschine, welche insbesondere als ein Generator bei einer Windenergieanlage eingesetzt wird, erlaubt sowohl eine flexible und kostengünstige Projektierung wie auch eine flexible und kostengünstige Herstellung, Montage und Demontage. Vorteilhaft ist es auch, dass die Leistung der elektrischen Maschine nachträglich erhöht oder auch reduziert werden kann. Dies gelingt durch zusätzliche Montage und Anschluß zumindest eines zusätzlichen Primärteilsegmentes. Die Leistung ist reduzierbar, indem ein Primärteilsegment entfernt wird. Da ein Primärteilsegment jeweils separat an einem Träger befestigt werden kann und das Primärteilsegment auch einen eigenen elektrischen Anschluß aufweist ist auch im Ersatzteilfall eine einfache und preisgünstige Reparatur möglich. Dies ist insbesondere bei Windkraftanlagen von Bedeutung, da diese durch die hohen Positionierung der als Generator dienenden elektrischen Maschine schwer zugänglich sind.

Bei Windkraftanlagen ist beispielsweise auch auf Grund des im Folgenden beschriebenen Sachverhaltes der Einsatz der erfindungsgemäßen elektrischen Maschine vorteilhaft. Wird z.B. aufgrund der örtlichen Windverhältnisse ein kleines Drehmoment erwartet, so muss nicht der gesamte Generatorumfang mit Primärteilsegmenten bestückt werden. Im Extremfall reicht nur ein Primärteilsegment an der Maschine bzw. an deren Umfang.

Nachfolgend werden verschieden Ausführungsformen der erfindungsgemäßen elektrischen Maschine beschrieben, wobei diese teilweise obig bereits angesprochen sind.

Die elektrische Maschine ist derart ausbildbar, dass das Primärteil Primärteilsegmente aufweist und/oder dass das Sekundärteil Sekundärteilsegmente aufweist, wobei insbesondere die Primärteilsegmente Wicklungen aufweisen, wobei insbesondere zur Ausbildung des scheibenartigen Primärteils ein für einen Linearmotor verwendbares Primärteil mit verwandt ist. Das auch für einen Linearmotor verwendbare Primärteil ist ein Primärteilsegment. Allgemein weist das Primärteilsegment vorteilhaft zumindest eines der folgenden Merkmale auf:

- einen eigenen elektrischen Anschluß
- einen Verguß
- Mittel zur Befestigung des Primärteilsegmentes.

Eines oder mehrere der Primärteilsegmente bilden das Primärteil der elektrischen Maschine aus.

Der eigene elektrische Anschluß weist vorteilhaft eine Einrichtung zur Ausbildung eines lösbaren elektrischen Kontaktes aufweist. Derartige Kontakte sind z.B. Klemmkontakte, Schraubkontakte oder dergleichen.

Zur leichten Montage ist das bzw. sind die Primärteilsegmente auf einem Träger als eine Trägereinrichtung befestigbar. Auch Sekundärteilsegmente können auf einer weiteren Trägereinrichtung lösbar oder auch unlösbar befestigt sein.

In einer vorteilhaften Ausgestaltung ist die Trägereinrichtung auch als eine Führungseinrichtung zur Führung des bewegten Teils der elektrischen Maschine vorgesehen. Das bewegte Teil ist entweder das Primärteil oder das Sekundärteil. Bezüglich des Primärteilsteils können die Primärteilsegmente auch jeweils einzeln oder in Gruppen durch die Führungseinrichtung geführt sein.

Wie obig bereits beschrieben ergibt sich durch die Anordnung der Segmente, insbesondere der Primärteilsegmente, eine kreisförmige Kontur. Die Primärteilsegmente und/oder die Sekundärteilsegmente sind folglich z.B. polygonartig angeordnet, wobei sich durch die polygonartige Anordnung eine kreisförmige Kontur ergibt.

In einer vorteilhafte Ausgestaltung ist das Primärteil der elektrischen Maschine polygonartig kreisförmig ausgebildet, wobei das Sekundärteil eine gegenüber dem Primärteil verbesserte Kreisform aufweist. Dadurch wird die Verwendung von Primärteilen eines Linearmotors als Primärteilsegment ermöglicht ohne dass sich die Oberwelleneigenschaften der elektrischen Maschine unnötig verschlechtern.

In einer weiteren Ausgestaltung weist das Primärteilsegment ein Belchpaket aufweist, wobei das Blechpaket Nuten zur Aufnahme der Wicklungen aufweist, wobei die Nuten insbesondere parallel zueinander angeordnet sind.

Das Sekundärteil kann derart ausgebildet sein, dass dieses Permanentmagnete aufweist, welche insbesondere derart mit einem Winkelversatz nebeneinander positioniert sind, dass dies zur Ausbildung einer Kreisform führt.

Um preisgünstige Sekundärteile herstellen zu können ist die elektrische Maschine auch derart ausbildbar, dass diese insbesondere eine Synchronmaschine ist, wobei das Primärteil Wicklungen als ein erstes Mittel zur Erzeugung eines ersten magnetischen Feldes aufweist und das Sekundärteil ein Mittel zur Führung des magnetischen Feldes aufweist, wobei das Primärteil zumindest ein weiteres Mittel zur Erzeugung eines weiteren magnetischen Feldes aufweist, wobei insbesondere das erste Mittel zur Erzeugung des ersten magnetischen Feldes derart zu dem weiteren Mitteln zur Erzeugung des weiteren magnetischen Feldes angeordnet ist, dass eine Überlagerung des ersten magnetischen Feldes mit dem weiteren magnetischen Feld ermöglicht ist. Hierfür weist das sekundärteilseitige Mittel zur Führung eines magnetischen Feldes eine Zahnstruktur aufweist.

Die erfindungsgemäße elektrische Maschine wird vorteilhaft als Windkraftgenerator eingesetzt.

Windkraftgenerator können in einer Gondel an einem Mast angebracht sein. Um eine leichte Montage des Windkraftgenerators innerhalb einer von Innen begehbaren Gondel zu ermöglichen ist der Windkraftgenerator derart angebracht, dass das Primärteil dem Mast zugewandt ist und das Sekundärteil dem Mast abgewandt ist.

Der Windkraftgenerator ist entweder derart ausgebildet, dass das Primärteil mit der Gondel mechanisch fest verbunden ist oder, dass das Sekundärteil mit der Gondel mechanisch fest verbunden ist. Das mechanisch nicht fest verbundene Teil ist mit einem Flügel einer Windkraftanlage verbunden.

Durch den flexiblen Aufbau der erfindungsgemäßen elektrischen Maschine, welche als Windkraftgenerator einsetzbar ist, ist es möglich zwei oder mehrere Windkraftgeneratoren zu koppeln. Die gekoppelten Windkraftgeneratoren sind beispielsweise axial hintereinander angeordnet. Es ist aber beispielsweise auch möglich, dass bei einem scheibenförmigen Windkraftgenerator Scheiben unterschiedlichen Umfangs (-> unterschiedlicher Durchmesser) jeweils einen Windkraftgenerator ausbilden und die Scheiben in einer Ebene liegen.

Eine Windkraftanalge weist zumindest einen Flügel auf, wobei in einer Ausführungsform das Sekundärteil des Windkraftgenerators mit dem Flügel mechanisch fest gekoppelt ist. In einer weiteren Ausführungsform ist das Primärteil mit dem Flügel mechanisch fest gekoppelt.

Für elektrische Maschinen, welche am Umfang nicht vollständig mit Primärteilsegmenten bestückt werden müssen bietet sich Typ von elektrischer Maschine an, bei welchem das Sekundärteil keine Permanentmagnete oder auch elektrische Wicklungen aufweist. Das Sekundärteil weist jedoch ein Mittel zur Führung eines magnetischen Feldes auf. Dieser Typ hat den Vorteil, dass er preisgünstig ist bzw. dass das oft unerwünschte magnetische Feld herkömmlicher Synchron-Linearmotor-Sekundärteile, welche mit Permanentmagneten bestückt sind, zu vermieden werden kann. Damit lässt sich die Montage vereinfachen. Dieser Typ, welcher auch bei vollständig über den Umfang mit Primärteilsegmenten bestückten Primärteilen einsetzbar ist, wird im folgenden beschrieben.

Bei der elektrischen Maschine diesen Typs ist das Primärteil derart ausgeführt, dass dieses zwei Mittel zur Erzeugung eines magnetischen Feldes aufweist. Das Sekundärteil ist frei von Mitteln zur Erzeugung eines magnetischen Feldes. Das Primärteil weist also ein erstes Mittel zur Erzeugung eines magnetischen Feldes und ein weiteres Mittel zur Erzeugung eines magnetischen Feldes auf, wobei das erste Mittel zur Erzeugung eines magnetischen Feldes mit einer Wechselspannung bzw. mit einem Wechselstrom beaufschlagbar ist. Das erste Mittel zur Erzeugung eines magnetischen Feldes welches ein erstes magnetisches Feld ist, ist beispielsweise eine Wicklung. Das weitere Mittel zur Erzeugung eines magnetischen Feldes, welches ein Erregerfeld ist, ist ein Mittel mit dem ein weiteres, also zumindest ein zweites, magnetisches Feld erzeugbar ist. Die Felderregung die das weitere magnetische Feld erzeugt ist vorteilhafter Weise im Betrieb unverändert, also konstant. Ein derartiges weiteres Mittel zur Erzeugung des Weiteren magnetischen Feldes ist beispielsweise ein Permanentmagnet bzw. eine Wicklung, welche mit einem konstanten Strom beaufschlagt bzw. baufschlagbar ist. Das weitere Mittel zur Erzeugung eines weiteren magnetischen Feldes weist vorteilhafter weise eine Vielzahl von weiteren Mitteln zur Erzeugung einer magnetischen Wechselpol-Felderregung auf.

Das erste Mittel zur Erzeugung eines ersten magnetischen Feldes ist beispielsweise eine Spulenwicklung, wobei das erste magnetische Feld, welches aus der Spule austritt bzw. in diese eintritt derart zu weiteren Mitteln (also zweiten, dritten, usw.) zur Erzeugung weiterer magnetischen Feldes geleitet ist, dass zumindest zwei weitere Mittel zur Erzeugung weiterer magnetischer Felder im Feldbereich des ersten magnetischen Feldes liegen, damit eine Wechselwirkung der beiden magnetischen Felder zustande kommt. Die weiteren Mittel zur Erzeugung weiterer magnetischer Felder weisen vorteilhafter Weise eine Vielzahl zueinander jeweils umgekehrter Magnetisierungsrichtungen auf, womit eine Anordnung mit einer Wechselpolmagnetisierung zustande kommt.

Die elektrische Maschine, welche ein Primärteil und ein Sekundärteil aufweist, wobei das Primärteil ein erstes Mittel zur Erzeugung eines ersten magnetischen Feldes aufweist und das Sekundärteil ein Mittel zur Führung des magnetischen Feldes aufweist ist also derart ausgebildet, dass das Primärteil zumindest zwei weitere Mittel zur Erzeugung zumindest zweier weiter magnetischer Felder aufweist, wobei das erste Mittel zur Erzeugung des ersten magnetischen Feldes derart zu den weiteren Mitteln zur Erzeugung der weiteren magnetischen Felder angeordnet ist, dass eine Überlagerung des ersten magnetischen Feldes mit den weiteren magnetischen Feldern ermöglicht ist.

Ein derartiger Aufbau der elektrischen Maschine hat den Vorteil, dass das Sekundärteil der elektrischen Maschine keine aktiven Mittel zur Erzeugung eines magnetischen Feldes aufweist. Das Sekundärteil einer derartigen elektrischen Maschine weist lediglich ein Mittel zur Führung magnetischer Felder auf und ist deshalb einfach und preisgünstig zu fertigen. Das Sekundärteil ist zur Vermeidung von Wirbelströmen beispielsweise geblecht ausgeführt.

Für den strukturellen Aufbau von Primärteil und Sekundärteil sind vorteilhafter Weise Weicheisenteile verwendbar. Die Blechung dieser Teile reduziert Wirbelströme. In weitern Ausführungsformen können die Weicheisenteile auch massiv und/oder als sogenannte Pulverpressteile ausgeführt sein.

Der Maschinentyp ist auch derart ausführbar, dass die elektrische Maschine ein Primärteil und ein Sekundärteil aufweist und das Primärteil ein erstes Mittel zur Erzeugung eines ersten magnetischen Feldes aufweist und weiterhin ein weiteres Mittel zur Erzeugung eines weiteren magnetischen Feldes aufweist, wobei das erste Mittel eine Wicklung ist und das weitere Mittel zumindest ein Permanentmagnet. Das weitere Mittel ist insbesondere eine Vielzahl von Mitteln, d.h. eine Vielzahl von Permanentmagneten. Bei einer derartigen Ausgestaltung der erfindungsgemäßen elektrischen Maschine finden sich alle Mittel zur Erzeugung eines magnetischen Feldes im Primärteil. Das Sekundärteil weist lediglich ein Mittel zur Führung magnetischer Felder auf und ist beispielsweise derart ausgeführt, dass es auf der zum Primärteil ausgerichteten Oberfläche Zähne aufweist. Dieses Mittel ist insbesondere ein eisenhaltiges Mittel, wie z.B. ein Blechpaket.

Das Sekundärteil und/oder das Primärteil sind beispielsweise derart ausgeführt, dass diese Zähne aufweisen. Eine Zahnteilung des Sekundärteils und eine Zahn- bzw. Magnetteilung des Primärteils kann sowohl gleich als auch unterschiedlich sein. Zum Beispiel werden bei gleicher Teilung Spulen eines Motorstranges gruppiert und mit einem Versatz von 360°/m zu weiteren Spulengruppen der anderen Motorstränge angeordnet. Mit "m" ist die Anzahl der Phasen bzw. der Stränge bezeichnet. Die Zahnteilung des Sekundärteils (Tau_Sek) gibt die Polteilung der Maschine (Tau_p) vor und es gilt Tau_zahn,sek = 2*Tau_p.

In einer Ausführungsform der elektrischen Maschine ist die Zahnteilung des Sekundärteils beispielsweise ein ganzzahliges Vielfaches der Magnetteilung des Primärteils. Die elektrische Maschine ist aber auch derart ausgestaltbar, dass die Zahnteilung des Sekundärteils kein ganzzahliges Vielfaches der Magnetteilung des Primärteils ist.

Die Permanentmagnete soind in das Primärteil integrierbar, so dass Spulen (Wicklungen) und Magnete (Permanentmagnete) im selben Teil (Primärteil) der elektrischen Maschine untergebracht sind. Für eine Kurzstatorbauweise wird, im Vergleich zum bekannten Motorprinzip wesentlich weniger Magnetmaterial benötigt. Das Sekundärteil besteht vorteilhafter Weise nur aus einer Eisen-Reaktionsschiene.

In einer weiteren vorteilhaften Ausgestaltung der elektrischen Maschine ist das weitere Mittel zur Erzeugung eines magnetischen Feldes (z.B. ein Permanentmagnet), welches in weichmagnetischen Magnetkreisabschnitten eingebettet ist, flusskonzentrierend angeordnet. Die Anordnung in Flusskonzentration ermöglicht eine hohe magnetische Auslastung der elektrischen Maschine. Unter der Einbettung ist eine derartige Positionierung der Permanentmagnete in weichmagnetischem Material zu verstehen, bei der an die Seiten der Permanentmagnete, an welchen das magnetische Feld austritt, ganz oder teilweise ein weichmagnetischen Material anschließt.

In einer weiteren Ausgestaltung der elektrischen Maschine weist deren Sekundärteil zumindest ein Mittel zum magnetischen Rückschluss auf. Dieses Mittel weist beispielsweise ein Blechpaket auf. Es ist weiterhin vorteilhaft das Sekundärteil derart auszubilden, dass dieses frei von magnetischen Quellen ist. Magnetische Quellen sind Beispielsweise Permanentmagnete oder auch bestromte (elektrisch bestromte) Wicklungen.

In einer weiteren Ausführungsform ist das Sekundärteil derart ausgeführt, dass dieses zum Primärteil hin gerichtete Zähne aufweist. Der Hauptfluss wird somit innerhalb des Sekundärteils über die Zähne und über den gegebenenfalls vorhandenen Rückschluss geführt. Bei der Führung des Flusses über die Zähne ist der Fluss beispielsweise jeweils nur über einen Zahn oder über zumindest zwei Zähne führbar.

Das erste Mittel zur Erzeugung eines ersten magnetischen Feldes ist vorteilhafterweise, wie bereits beschrieben, eine bestrombare Wicklung. Die bestrombare Wicklung einer Maschine besteht aus einem oder mehreren Strängen (z.B. U,V,W). Jeder Strang besteht aus einer oder mehreren Spulen. Eine vorteilhafte Ausführung der Spulen ist dadurch gekennzeichnet, das es sich um konzentrierte Spulen handelt, die um je einen Zahn gewickelt sind (Zahnspulen), wobei der Zahn einen oder mehrere Pole bzw. Permanentmagnete tragen kann. Die Zahnspule ist dabei zumindest ein Teil einer Wicklung. Die Spule kann als Einzelspule wie auch als geteilte Spule ausgeführt sein. Der Vorteil der Wicklung ist es, dass mit Hilfe dieser in einfachster Weise ein sich änderndes magnetisches Feld beispielsweise mittels eines Wechselstromes herstellbar ist. Die elektrische Maschine ist beispielsweise auch derart ausführbar, dass diese mehrere Wicklungen bzw. Spulen aufweist, wobei diese Wicklungen mit verschiedenen Phasen einer Drehstromquelle bestrombar sind.

Eine elektrische Maschine ist auch derart ausführbar, dass ein Sekundärteil Zähne aufweist, welche mit einem Teilungsabstand Tau_Sek zueinander angeordnet sind. Das Primärteil der elektrischen Maschine beinhaltet das zweite Mittel zur Erzeugung eines magnetischen Erregerfeldes, welches aus einer Vielzahl der Mittel realisiert wird (z.B. viele Permanentmagnete), die mit einem Teilungsabstand Tau_Prim zueinander angeordnet sind.

Eine Ausführung der elektrische Maschine zeichnet sich nun dadurch aus, dass die Beziehung zwischen Tau_Sek und Tau_Prim durch folgende Gleichung ausgedrückt werden kann:

$$Tau\_Sek = n*Tau\_Prim \quad wobei \ n= 1,2,3,...$$

Tau_Sek lässt sich also durch ein ganzzahliges Vielfaches von Tau_Prim ausdrücken.

Bei einer weiteren Ausführung der elektrischen Maschine lässt sich die Beziehung zwischen Tau_Sek und Tau_Prim durch die Gleichung:

$$Tau\_Sek \neq n*Tau\_Prim \quad wobei \ n= 1,2,3,...$$

angeben. Der Teilungsabstand Tau_Sek ist also kein ganzzahliges Vielfaches des Teilungsabstandes Tau_Prim.

Wie bereits obig beschrieben, weist eine weitere Ausführung der elektrischen Maschine als weitere Mittel zur Erzeugung zumindest eines zweiten magnetischen Feldes Permanentmagnete auf. Vorteilhafterweise sind die Permanentmagnete derart am Primärteil angeordnet, dass diese ein magnetisches Erregerfeld jeweils in unterschiedlichen Richtungen erzeugen.

In einer Ausgestaltung der Anordnung der Permanentmagnete sind die Magnetisierungsrichtungen der Permanentmagnete zwar parallel jedoch abwechselnd entgegengesetzt.

In einer weiteren Ausgestaltung der elektrischen Maschine weist diese ein Primärteil und zwei Sekundärteile auf. Das Primärteil ist zwischen den beiden Sekundärteilen angeordnet. Diese Anordnung ist derart ausgebildet, dass sich ein Magnetkreis, welcher sich durch einen magnetischen Nutzfluss ausbildet, über das Primärteil und beide Sekundärteile schließt.

Bei einer weiteren Ausgestaltung der elektrischen Maschine, weist diese zwei Primärteile und ein Sekundärteil auf. Das Sekundärteil ist zwischen den beiden Primärteilen angeordnet. Die Primärteile und das Sekundärteil sind derart ausbildbar, dass sich ein Magnetkreis, welcher sich durch einen magnetischen Nutzfluss ausbildet, über die beiden Primärteile und das Sekundärteil schließt.

Die Primärteile und das Sekundärteil sind jedoch auch derart ausbildbar, dass sich ein Magnetkreis, welcher sich durch einen magnetischen Nutzfluss ausbildet, über jeweils ein Primärteil und das gemeinsame Sekundärteil schließt.

Die nachfolgenden Figuren zeigen Beispiele für erfindungsgemäße Ausgestaltungen von erfindungsgemäßen elektrischen Maschinen, entsprechenden Windkraftgeneratoren bzw. Windkraftanlagen. Dabei zeigt:

FIG 1    eine Windkraftanlage
FIG 2    eine scheibenförmige elektrische Maschine
FIG 3    einen Ausschnitt von einer scheibenförmigen elektrischen Maschine
Fig 4    einen Ausschnitt einer nicht erfindungsgemäßen zylinderförmigen elektrischen Maschine im Querschnitt mit geraden Primärteilsegmenten
FIG 5    einen Ausschnitt einer nicht erfindungsgemäßen zylinderförmigen elektrischen Maschine im Querschnitt mit gebogenen Primärteilsegmenten
FIG 6    einen Prinzipdarstellung eines Linearmotors,
FIG 7    einen Linearmotor mit Permanentmagneten am Primärteil,
FIG 8    einen ersten Verlauf von magnetischen Feldern im Linearmotor,
FIG 9    einen zweiten Verlauf von magnetischen Feldern im Linearmotor,
FIG 10    einen zeitlichen Verlauf von Fluss, induzierte Spannung und Leistung,
FIG 11    eine Veranschaulichung der Kraftentwicklung,
FIG 12    Geometrie und Feldbild eines Linearmotors mit einer Querfluss-Ausrichtung,
FIG 13    perspektivisch einen Linearmotor mit einer Längsfluss-Ausrichtung,
FIG 14    einen Linearmotor mit einem einen Polschuh aufweisenden Primärteil,
FIG 15    Geometrie und Feldbild eines Linearmotors mit Längsfluss-Ausrichtung,
FIG 16    einen Linearmotor mit unterschiedlichen Strängen für unterschiedliche Phasen,
FIG 17    Geometrie und Feldbild eines Linearmotors mit Zahnmagneten in Flusskonzentration,
FIG 18    Geometrie und Feldbild eines Linearmotors mit Jochmagneten in Flusskonzentration,
FIG 19    eine Gegenüberstellung eines Primärteils mit einem Querfluss-Magnetkreis und eins Primärteils mit einem Längsfluss-Magnetkreis,
FIG 20    eine Gegenüberstellung von elektrischen Maschinen mit einer Wechselfluss-Anordnung und einer Gleichfluss-Anordnung,
FIG 21    eine elektrische Maschine mit doppelseitig angeordneten Sekundärteilen,
FIG 22    eine elektrische Maschine mit doppelseitig angeordneten Primärteilen,

FIG 23    einen magnetischen Feldverlauf einer Querfluss-Magnetkreisanordnung, welcher durch einen elektrischen Strom hervorgerufen ist,

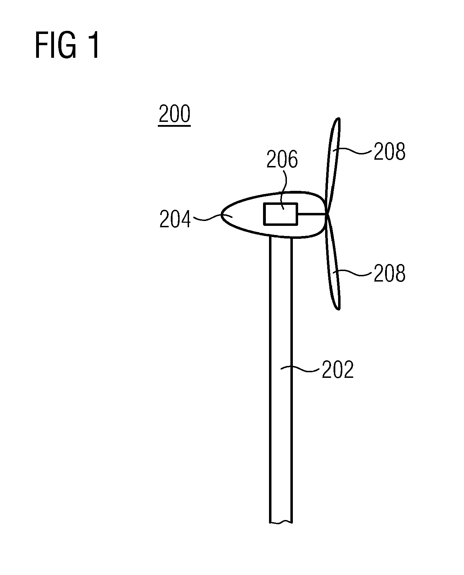

Die Darstellung gemäß FIG 1 zeigt eine Windkraftanlage 200. Die Windkraftanlage 200 weist einen einen Mast 202 und eine auf diesem Mast angebrachte Gondel 204 auf. In dieser Gondel ist ein Windkraftgenerator 206 untergebracht. Der Windkraftgenerator 206 ist mit Flügeln 208 verbunden.

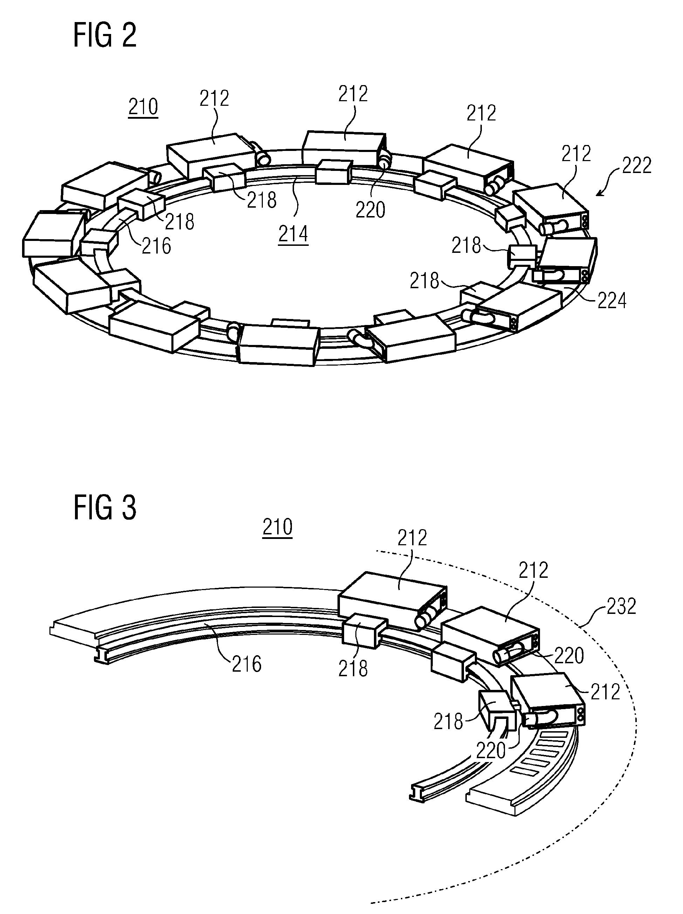

Die Darstellung gemäß FIG 2 zeigt eine scheibenförmige elektrische Maschine 210 mit einem scheibenförmigen Luftspalt. Diese Maschien weist Primärteilsegmente 212 auf. Die Primärteilsegmente 212 werden mittels einer Trägereinrichtung 214 geführt. Die Trägereinrichtung 214 weist eine Führungsschiene 216 und auf dieser geführte Schlitten 218 auf. Die Schlitten 218 sind mit den Primärteilsegmenten 212 mechanisch verbunden. Über nicht dargestellte Abstandhalter lassen sich die Primärteilsegmente 212 voneinander beabstanden. Jedes der Primärteilsegmente 212 weist einen eigenen elektrischen Anschluss 220 auf. Die Primärteilsegmente 212 dienen der Ausbildung eines Primärteils 222. Dem Primärteil ist ein Sekundärteil 224 zugeordnet. Das Sekundärteil 224 ist als rotationssymmetrisches Eisenreaktionsteil ausbildbar, wobei das Sekundärteil 224 einteilig oder mehrteilig, also segmentiert, ausbildbar ist. Die Primärteilsegmente 212 werden vorteilhaft aus geraden Linearmotor-Statoren gebildet und kreisförmig angeordent. Hieraus ergibt sich ein Umfang der elektrischen Maschine. FIG 2 stellt einen ringförmigen Torquemotor aus geraden Statorelementen und rotationssymmetrischen Sekundärteil dar.

Die Darstellung gemäß FIG 3 zeigt im Ausschnitt eine elektrische Maschine ähnlich der in FIG 2, wobei die elektrische Maschine (210) weniger Primärteilsegmente 212 aufweist und das Sekundärteil 224 nunmehr auch Permanentmagnete 226 aufweist. In FIG 2 sind die Permanentmagnete in den Primärteilsegmenten 212 integriert. In der Darstellung nach FIG 3 ist mittels einer gestrichelten Linie 232 auch die Position für eine weitere scheibenförmige elektrische Maschine gezeigt. Diese nicht dargestellte weitere scheibenförmige elektrische Maschine weist einen größeren Umfang auf, als die dargestellte scheibenförmige elektrische Maschine 210. Der innere Umfang der nicht dargestellten scheibenförmigen elektrischen Maschine ist kleiner zu wählen als der äußere Umfang der dargestellten elektrischen Maschine 210, um zu erreichen, dass beide in etwa in der gleichen Ebene positionierbar sind.

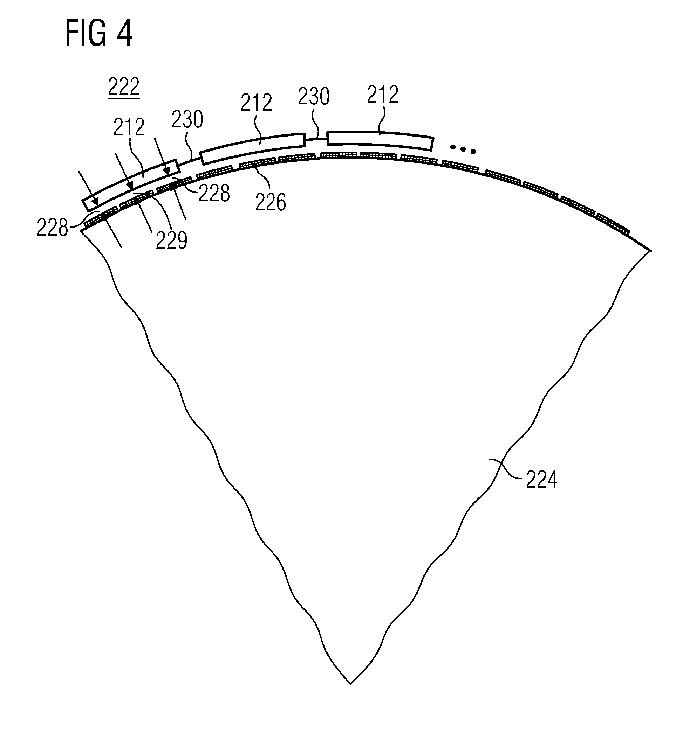

Die Darstellung gemäß FIG 4 zeigt einen Ausschnitte einer nicht erfindungsgemäßen elektrischen Maschine mit einer zylindrischen Grundform im Querschnitt. Das Sekundärteil 224 weist Permanentmagnete 226 auf. Das Primärteil 222 weist gerade Primärteilsegmente 212 auf, wobei diese mittels Verbindungselementen 230 miteinander verbunden sind. Durch die gerade Ausführungsform der Primärteilsegmente 212 ergeben sich unterschiedliche Luftspaltdicken 228, 229. Mittig zum Primärteilsegment 212 ist der Luftspalt 229 kleiner als an den äußeren Bereichen des geraden Primärteilsegmentes 212, wobei sich ein größerer Luftspalt 228 ergibt.

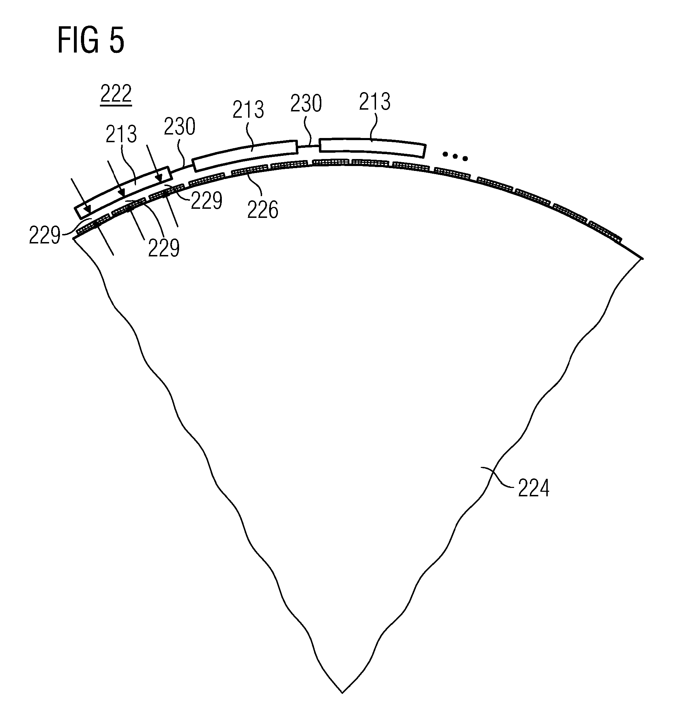

Die nicht erfindungsgemäße Darstellung gemäß FIG 5 zeigt im Unterschied zu FIG 4 gekrümmte Primärteilsegmente 213. Durch die bogenförmige Krümmung ist der Luftspalt 229 zwischen dem Primärteil 222 und dem Sekundärteil 224 unabhängig vom Primärteilsegment 213 gleich.

Bei anzutreibenden Bauteilen mit relativ großen Durchmessern und gleichzeitig relativ kleinen Drehzahlen, wie sie im Bereich von Windkraftanlagen vorliegen, bietet ein segmentierter Primärteilsegmente aufweisender Generator beispielsweise folgende Vorteile:

- Skalierbarkeit der Generatorleistung durch baukastenmäßigen Aufbau des Generators - flexible Projektierung des Generators durch Variation von Serien-, Parallel- oder Einzelanschaltung der Primärteile an einem oder mehreren Stromrichtern möglich

    - niedrige Herstellkosten des Generators im Vergleich zu großen elektr. Maschinen, da "Standardkomponenten" verwendbar sind, welche mit einfachen (und vorhandenen) Produktionsmitteln in großer Stückzahl herstellbar sind

- Verwendung vorhandener Bauteile, welche für die derzeitige Generatorspannung im Mittelspannungsbereich (bis 720 V DC) bereits zur Verfügung stehen
- einfache und kostengünstige Montage des Motors beim Anlagenhersteller oder vor Ort
- verschleißfrei => höhere Anlagenverfügbarkeit

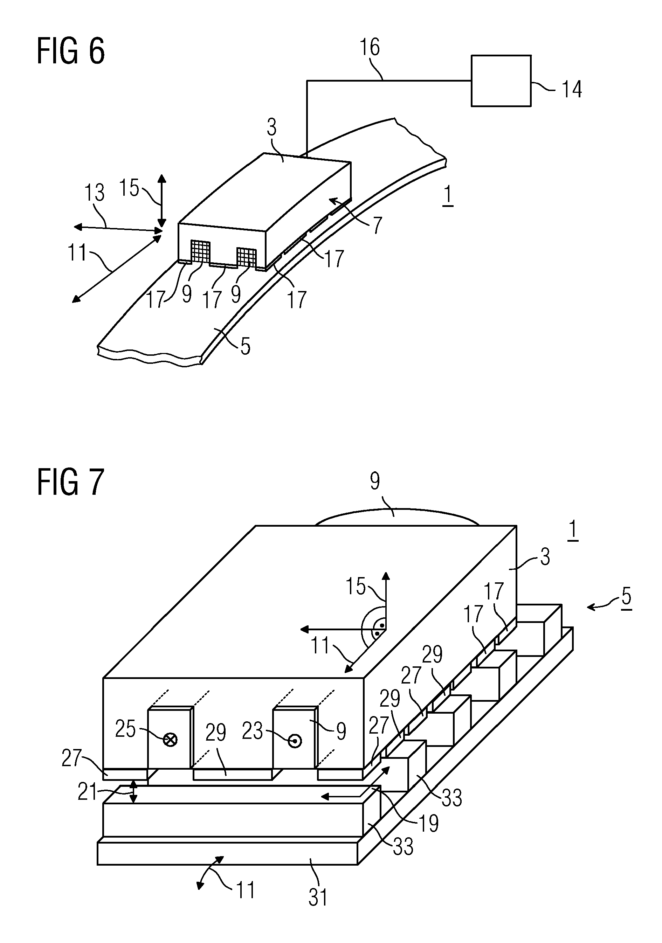

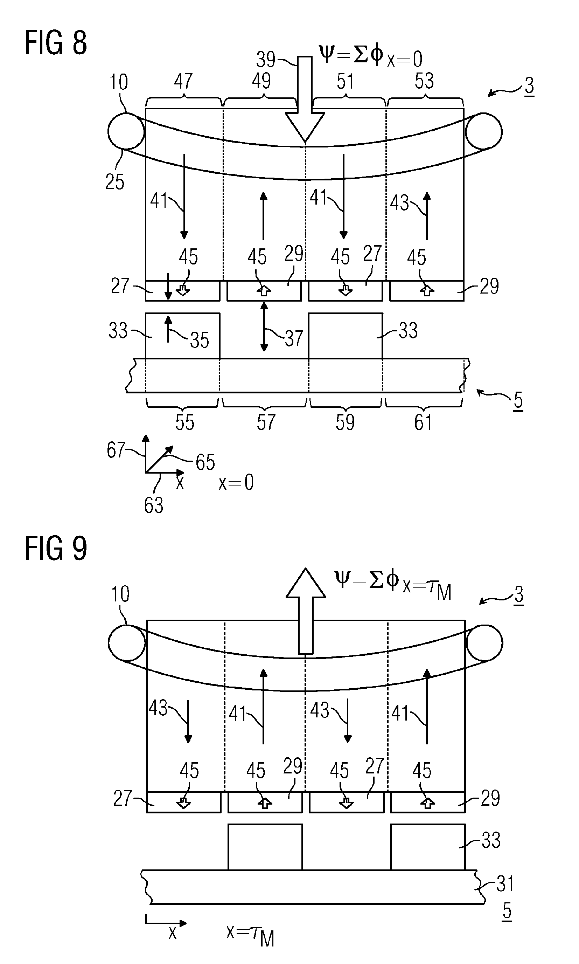

Die Darstellung gemäß FIG 6 zeigt eine elektrische Maschine 1. Die elektrische Maschine 1 weist ein Primärteil 3 und ein bogenförmiges Sekundärteil 5 auf. Das Sekundärteil schließt sich zu einem Kreis, wobei dies nicht dargestellt ist. Der Primärteil 3 weist eine Wicklung 9 und Permanentmagnete 17 auf. Ein erster Doppelpfeil 11 gibt eine Längsrichtung an, wobei ein weiterer Doppelpfeil die Querrichtung 13 angibt. Mittels eines dritten Doppelpfeils ist die Normale 15 bestimmt, wobei die Normale sich auf eine Luftspaltebene 19 bezieht, wobei die Luftspaltebene 19 in FIG 6 nicht dargestellt ist. Die Luftspaltebene 19 ist jedoch in FIG 7 dargestellt. Mittels eines Pfeils ist eine Seitenansicht 7 angezeigt, welche die Darstellung gemäß FIG 8 und 9 betrifft. Die elektrische Maschine 1 ist ein Linearmotor welcher mittels eins über ein Anschlusskabel 16 angeschlossenen Stromrichter 14 ansteuerbar ist.

In den nachfolgenden Darstellungen ist das Sekundärteil wie auch das Primärteil zur Vereinfachung der zeichnerischen Darstellung immer gerade ausgeführt. Bei der erfindungsgemäßen elektrische Maschine ist das Primärteil bzw. das Sekundärteil stets kreis- bzw. scheiben- bzw. zylinderförmig ausgeführt.

Die Darstellung gemäß FIG 7 zeigt eine elektrische Maschine 1. Das Primärteil 3 ist als Blechpaket ausgeführt, wobei das Primärteil 3 eine Wicklung 9 aufweist. Die Wicklung 9 ist eine Strangwicklung, wobei diese mit einem Wechselstrom bestrombar ist. Die Richtung des Stroms ist in FIG 7 zu einem Augenblick dargestellt. Dabei ist die Richtung mittels eines Punktes 23 bzw. mittels eines Kreuzes 25 gekennzeichnet. Das geblecht ausgeführte Primärteil 3 weist an der Seite, welche den Sekundärteil 5 zugewandt ist, Permanentmagnete 17 auf. Die Permanentmagnete 17 sind auf den Primärteil derart angebracht, dass sich deren Magnetisierung in Richtung der Normalen 15 abwechselt. Die Magnete (Permanentmagnete) erzeugen also einen magnetischen Fluss der abwechselnd nach oben (zum Primärteil 3 hin) und nach unten (zum Sekundärteil 5 hin) weist. Nord-Süd-Permanentmagnete (N-S) 27 (die Magnetisierungsrichtung weist zum Sekundärteil) wechseln sich also mit der Süd-Nord-Permanentmagneten (S-N) 29 (die Magnetisierungsrichtung weist zum Primärteil) ab. Zwischen dem Primärteil 3 und dem Sekundärteil 5 bildet sich ein Luftspalt 21 heraus. Dieser Luftspalt 21 spannt die Luftspaltebene 19 auf. Die Bewegung der elektrischen Maschine 1, welche im vorliegenden Fall eine Linearmaschine ist, erfolgt in Richtung der Längsrichtung 11. Hierbei ist es möglich, dass entweder das Primärteil 3 stationär ist und sich das Sekundärteil 5 bewegt oder dass das Sekundärteil 5 stationär ist und sich das Primärteil 3 über das Sekundärteil 5 hinweg bewegt. Die Wicklung 9 ist ein erstes Mittel, zur Erzeugung eines ersten magnetischen Feldes und die Permanentmagnete 17 sind weitere Mittel zur Erzeugung weiterer magnetischer Felder. Die Darstellung gemäß FIG 7 zeigt eine Querflussausführung der elektrischen Maschine 1. Bei der Querflussausführung ist das Sekundärteil 5 beispielsweise derart ausgeführt, dass dieses einen Träger 31 und Riegel 33 aufweist. Zumindest die Riegel 33 sind geblecht ausgeführt. Die Blechung erfolgt derart, dass sich in einer gebogenen Längsrichtung 11 Blech an Blech anschließt. Die Riegel 33 sind auf den Träger 31 beispielsweise aufgeklebt oder aufgelötet oder angeschweißt bzw. in einer Kombination von Befestigungsmöglichkeiten miteinander verbunden. Die Blechung ist zur Vermeidung von Wirbelströmen vorteilhaft. Falls die negativen Wirbelstromeffekte nicht stark ausgeprägt sind (z.B. bei Anwendungen mit ausreichend niedriger elektrischer Grundfrequenz) kann auf Blechung verzichtet werden und kostengünstige Massivteile verwendet werden.

Die Darstellung gemäß FIG 8 zeigt im Ausschnitt in Primärteil 3 und ein Sekundärteil 5. Dieser Ausschnitt gemäß FIG 8 gibt schematisch wieder, wie sich magnetische Felder in einem Primärteil 3 aufteilen können, wobei dabei die Form einer Seitenansicht gewählt ist, welche einer Seitenansicht 7 gemäß FIG 6 entspricht. In der FIG 8 ist eine Windung einer Wicklung 10 gezeigt. Weiterhin ist gezeigt, dass das Primärteil 3 sowie das Sekundärteil 5 in Sektionen aufteilbar sind. Das Primärteil weist Primärsektionen 47, 49, 51 und 53 auf, wobei sich diese Primärsektionen 47, 49, 51 und 53 auf die Permanentmagnete 27, 29 beziehen. Die Sektionen sind dabei Bereiche, in welchen entsprechend der Magnetisierungsrichtung der Permanentmagnete 27 und 29 der magnetische Fluss entweder vom Sekundärteil 5 weg verläuft bzw. zum Sekundärteil 5 hin verläuft. Der Verlauf ist mit Pfeilen 41, 43 dargestellt. Die Summe aller mit der Wicklung 10 verketteten magnetischen Flüsse bildet einen Verkettungsfluss $\psi$. Der Verkettungsfluss wird hauptsächlich durch die Magnete erzeugt die einen magnetischen Rückschluss über das Sekundärteil 5 ausbilden können. Die unterschiedlich langen Flusspfeile zeigen für jeden Magneten den mit der Wicklung (Spule) verketteten Fluss. Das Sekundärteil 5 weist entsprechend den vorhandenen Riegeln 33 auch Sektionen auf. Diese Sekundärsektionen 55, 57, 59 und 61 entsprechen also den Abschnitten in welchen ein Riegel 33 vorhanden bzw. nicht vorhanden ist. Mittels der Riegel 33 ist ein magnetischer Fluss führbar. Die Führung des magnetischen Flusses erfolgt im vorliegenden Beispiel senkrecht zu einer dargestellten X-Achse 63. Der Fluss verläuft also senkrecht zur Blattebene, auf welchen die Figur dargestellt ist, wobei dies einer Y-Achse 65 entspricht. Senkrecht zur X- und Y-Achse steht die Z-Achse, so dass alle Achsen senkrecht aufeinander stehen. Ein magnetischer Erregerfluss, welcher beispielsweise durch einen Nord-Süd-Permanentmagneten 27 hervorgerufen wird, schließt sich über den Riegel 33 und das Primärteil 3 in einer Sektion 47 in Verbindung mit der Sektion 55. Dabei weist das Primärteil 3 beispielsweise hinter einem ersten Nord-Süd-Permanentmagneten 27 (N-S-Permanentmagnet) einen weiteren Permanentmagneten auf, welcher in entgegengesetzter Richtung magnetisiert ist, so dass dieser eine S-N-Permanentmagnet 29 ist. Ein derartiger Permanentmagnet 29 ist jedoch in der FIG 8 nicht dargestellt, da dieser dahinter zu liegen kommt. An den Positionen, wo ein Riegel 33 einem Permanentmagneten 27, 29 gegenüberliegt, ergibt sich ein schmaler Luftspalt 35. An benachbarten Positionen ohne einen Riegel 33 ergibt sich ein weiter Luftspalt 37. Dadurch, dass die Luftspalte 35 und 37 nicht gleich sind, werden in Sektionen 47,51 und 49,53 durch Permanentmagnete 27 und 29 unterschiedlich starke magnetische Flüsse 41 und 43 erzeugt. Der resultierende Fluss 39 ergibt sich als Summe aller Flüsse 41 und 43.

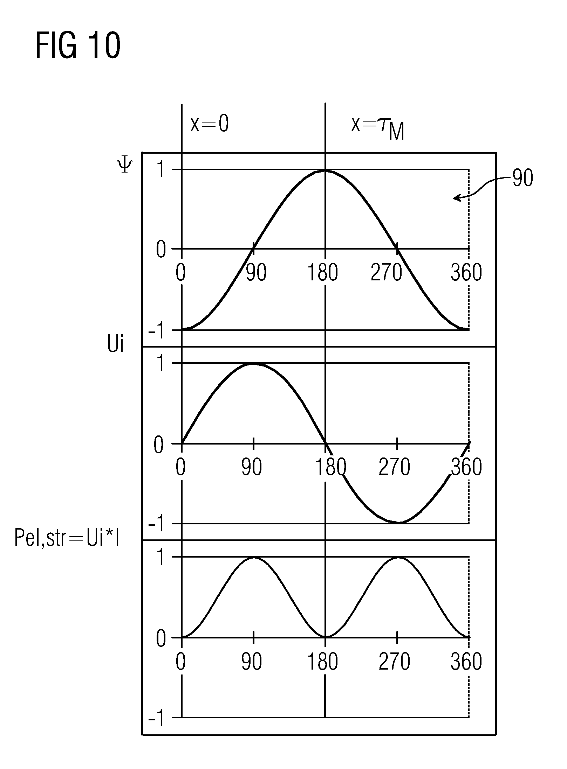

Die Darstellung gemäß FIG 8 zeigt den magnetischen Erregerfluss 41, 43 zeitlich zu dem Zeitpunkt und für die Position von Primärteil 3 und Sekundärteil 5 an, bei welchem ein Strom in der Wicklung 10 einen Nulldurchgang hat. Der positionsabhängige Verlauf des magnetischen Erregerflusses bzw. der induzierten Spannung in der Wicklung und der dabei umgesetzten Leistung eines bestromten Motors sind in Fig. 10 dargestellt. Für die in FIG 8 dargestellte Position des Sekundärteils X=0 ergibt sich ein negativer Verkettungsfluss $\psi$, für die eine Position X=$\tau_M$, welche in FIG 9 dargestellt ist, ein positiver Fluss $\psi$. Die Darstellung gemäß FIG 9 zeigt das Sekundärteil 5 also in einer Position X=$\tau_M$. Bewegt sich das Sekundärteil 5 also um eine magnetische Polteilung, ändert sich dadurch die Flussverkettung 39 der Spule (Wicklung 10) allmählich von einem negativen zu einem positiven Wert. Wie die Änderung verläuft kann durch Geometrieparameter wie Magnetbreite, Luftspalt, Zahnbreite (Breite der Riegel 33) usw. beeinflusst werden. In einer vorteilhaften Ausgestaltung ist eine möglichst sinusförmige Änderung angestrebt.

Die Darstellung gemäß FIG 10 zeigt in drei Graphen den magnetischen Verkettungsfluss $\psi$, die daraus resultierende induzierte Spannung $U_i$ und die elektrische Leistung $P_{el,str}$ eines Strangs/einer Wicklung, im zeitlichen Verlauf. Der zeitliche Verlauf wird durch die Angabe der Phasenposition der Spannung repräsentiert. Der Verlauf des Flusses $\psi$ gibt auch den Verlauf des magnetischen Feldes 90 wieder, welches z.B. mittels Permanentmagneten erzeugbar ist. Für die optimale Kraftbildung eines Stranges muss der Strom in Phase mit der induzierten Spannung eingeprägt werden. Weiterhin sind die Positionen X=0 und X=$\tau_M$ gezeigt, wobei sich diese Positionen zusammen mit den weiteren dargestellten Verläufen von Fluss $\psi$, Spannung $U_i$ und elektrischer Leistung $P_{el,str}$ auf die symbolische Darstellung gemäß FIG 8 und 9 beziehen. Aus dem dritten Graphen, auf welchem die elektrische Leistung aufgetragen ist, ist ersichtlich, dass für eine konstante Leistung (~ Kraft) die Anzahl der Motorstränge m größer und/oder gleich zwei sein muss. Vorteilhafter weise sind drei Stränge gewählt, da dreisträngige Umrichter weniger Halbleiterventile benötigen als zwei- oder mehrsträngige.

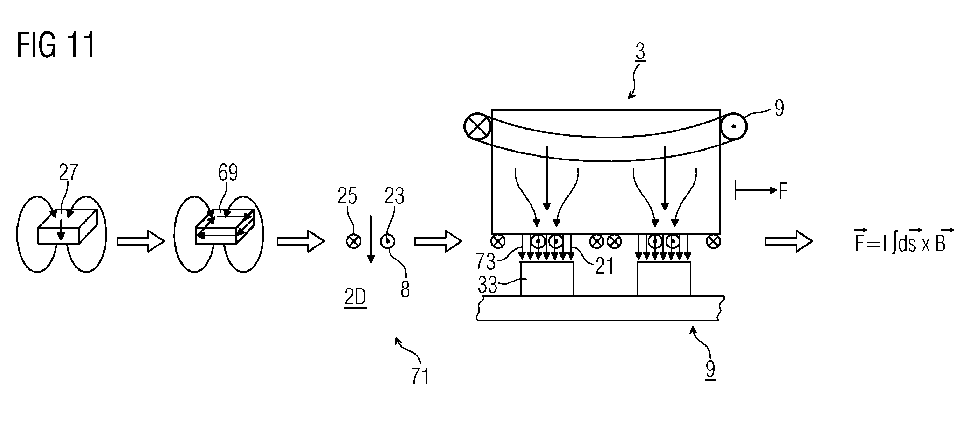

Die Darstellung gemäß FIG 9 dient zur Veranschaulichung des technischen Prinzips und veranschaulicht die Erzeugung einer Kraft F. Um die Kraftbildung in Längsrichtung eins Linearmotors etwas anschaulicher zu machen, wird ein Hilfsmodell vorgestellt. Ein Permanentmagnet 27 wird durch Ströme auf einer diesem zugehörigen Mantelfläche ersetzt. Der Permanentmagnet 27 lässt sich also beispielsweise durch einen Quader gedanklich repräsentieren, wobei auf den Seitenflächen des Quaders 69, wie dargestellt, Strom fließt. In einem Model 71 lässt sich also der Permanentmagnet 27 durch eine Wicklung repräsentieren, wobei gemäß dem Model die Richtung des Stromes innerhalb der Wicklung durch einen Punkt 23 bzw. einem Kreuz 25 dargestellt ist. In der Darstellung 2D wird der Magnet auf den Leiterquerschnitt der äquivalenten Ströme reduziert. Substituiert man nun in der Seitenansicht des Primärteils die Magnete, ergibt sich die darauf folgende Anordnung. Das durch die Wicklung 9 erzeugte magnetische Feld konzentriert sich im Luftspalt 21 an den Stellen der Riegel 33, welche als Flussleitstücke dienen, da hier der magnetische Widerstand am geringsten ist. Die fiktiven Leiter liegen also im Feld der Strangspule, verstärken es auf der einen und schwächen es auf der anderen Seite. Die Leiter "weichen" in den Bereich geringerer Feldstärke aus, was mit der Richtung der auf das Primärteil wirkenden Kraft F in FIG 11 dargestellt ist. Dieser Zusammenhang wird auch durch die "Rechte-Hand-Regel" beschrieben, bei der der Strom, das magnetische Feld und die Kraft F in einem rechten Winkel stehen. In der in FIG 11 gezeigten Lage X=$\tau_{M/2}$ von Primärteil 3 und Sekundärteil 5 zueinander erreicht der Strangstrom, also der Strom durch die Wicklung 9 sein Maximum.

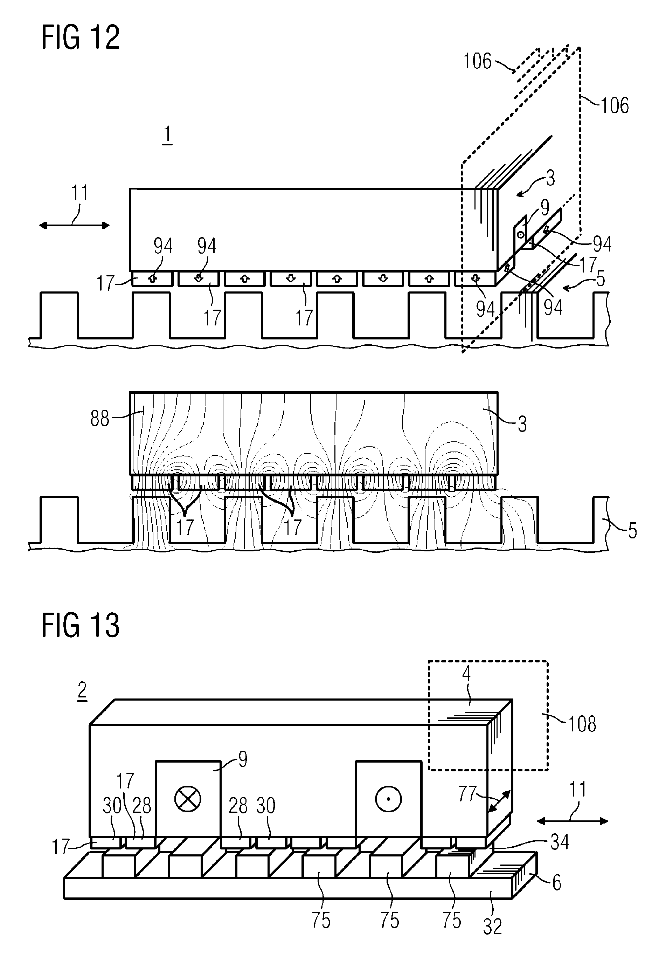

Die Darstellung gemäß FIG 12 zeigt schematisch die Geometrie eines Querfluss-Linearmotors 1 und ein magnetisches Erregerfeld 88, welches von den Permanentmagneten 17 erzeugt wird. Ein magnetischer Nutzfluss ist in einer quer zu einer Bewegungsrichtung (11) ausgerichteten Ebene (106) geführt. Der magnetische Nutzfluss ist der magnetische Fluss, welcher mit der Spule 9 gekoppelt bzw. verkettet ist. Dieser derart ausgerichtete magnetische Nutzfluss bildet einen Querfluss-Magnetkreis aus.

Das Erregerfeld 88 in FIG 12 ist das weitere magnetische Feld bzw. die weiteren magnetischen Felder. Der Linearmotor 1 weist ein geblechtes Primärteil 3 und ein geblechtes Sekundärteil 5 auf. Die Stapelrichtung der Blechpakete ist prinzipiell angedeutet. Die Magnetisierungsrichtung 94 der Permanentmagnete 17 ist mittels Pfeilen verdeutlicht. Die mögliche Bewegungsrichtung des Primärteils ist die Längsrichtung 11.

Die Darstellung gemäß FIG 13 zeigt ein Primärteil 4 und ein Sekundärteil 6. Das Primärteil 4 und das Sekundärteil 6 bilden die elektrische Maschine 2, wobei die elektrische Maschine 2 eine Längsfluss-Anordnung aufweist. Die Längsfluss-Anordnung zeichnet sich insbesondere dadurch aus, dass die magnetischen Felder sich nicht quer zur Bewegungsrichtung des Primärteils bzw. des Sekundärteils schließen sondern längs der Bewegungsrichtung des Primärteils bzw. längs der Bewegungsrichtung des Sekundärteils. Der magnetische Fluss, welches in einer Ebene 108 geführt ist, wobei die Ebene 108 parallel zur Bewegungsrichtung 11 orientiert ist, ist ein magnetischer Nutzfluss. Der magnetische Nutzfluss ist der magnetische Fluss, welcher mit der Spule 9 gekoppelt ist. Dieser derart ausgerichtete magnetische Nutzfluss bildet einen Längsfluss-Magnetkreis aus.

Das Sekundärteil 6 ist gemäß FIG 13 sowohl im Bereich des Trägers 32 wie auch im Bereich der Riegel 34 geblecht ausgeführt. Die Anordnung der Magnete in der Luftspaltebene ist im Gegensatz zu der Querfluss-Anordnung nicht schachbrettartig ausgeführt sondern streifenförmig. Die Magnete sind bei der Längsfluss-Variante im wesentlichen parallel zu den Riegeln (Flussleitstücken) ausgereichtet. Zur Verringerung von Kraftwelligkeiten können die Magnete jedoch gezielt in einer Art Schräglage positioniert sein.

In einer weiteren vorteilhaften Ausgestaltung wird das Sekundärteil 6 aus Blechen hergestellt, die über die Motorbreite hintereinander gestapelt werden. Bei solchen Blechen bestehen der Träger 32 und die Zähne 75 aus einem Teil. Durch das hintereinander Stapeln der Bleche entsteht die gezahnte Struktur des Sekundärteils mit den Riegeln 34. Die Art der Blechung ist in Fig. 13 angedeutet. Das Sekundärteil kann beispielsweise in Längsrichtung mehrteilig aufgebaut sein, so dass ein Sekundärteil 6 an ein nächstes Sekundärteil angrenzt. Derartige weitere in Bewegungsrichtung angrenzende Sekundärteile sind in der Darstellung gemäß FIG 13 jedoch nicht dargestellt. Die Darstellung gemäß FIG 13 zeigt weiterhin die Permanentmagnete. Die Permanentmagnete sind N-S-Permanentmagnete 28 oder S-N-Permanentmagnete 30. Diese Permanentmagnete erstrecken sich beispielsweise über eine gesamte Blechpaketbreite 77 des Primärteils 4.

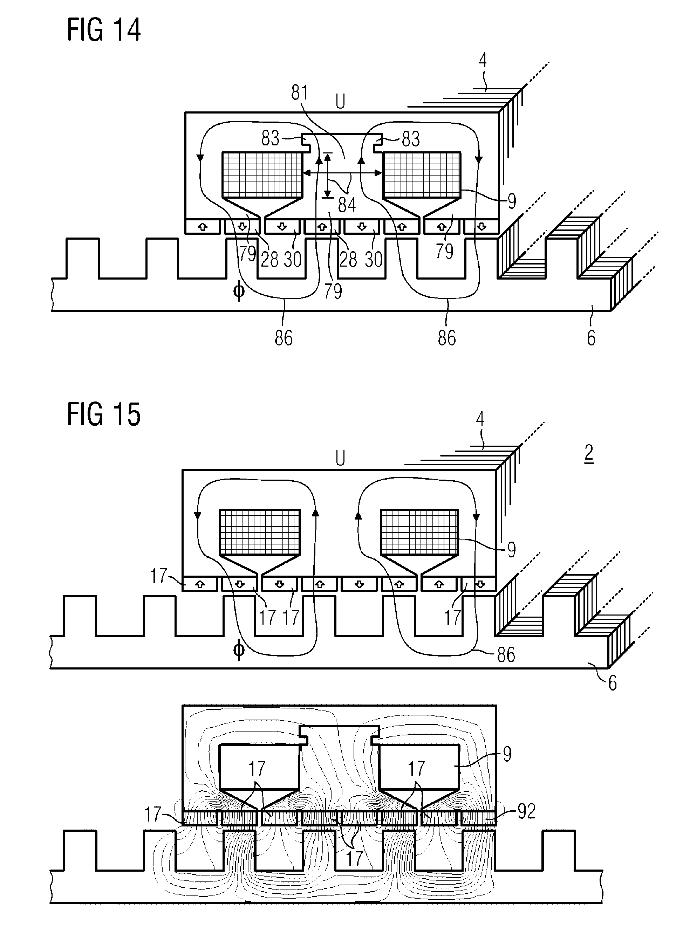

Die Darstellung gemäß FIG 14 zeigt eine Weiterentwicklung einer elektrischen Maschine 2 gemäß FIG 13. Das Primärteil 4 ist dabei derart ausgebildet, dass dieses Polschuhe 79 aufweist. Die Polschuhe 79 verbreitern die Auflagefläche für Permanentmagnete 28, 30. Hierdurch lässt sich die Kraftausbeute der elektrischen Maschine 2 erhöhen. Da sich durch die Vergrößerung der Fläche zur Positionierung der Permanentmagnete der Bereich verengt, in welchem eine Wicklung 9 im Primärteil einlegbar ist, ist das Primärteil 4 vorteilhafterweise derart ausgeführt, dass es einen Wickelkörper 81 aufweist. Der Wickelkörper 81 weist sowohl einen Polschuh 79 wie auch einen Wickelhals 84 auf. Um den Wickelhals 84 ist die Wicklung 9 wickelbar und anschließend in das Primärteil 4 einschiebbar. Der Wickelkörper 81 hält vorteilhafterweise mittels Nasen 83 im Primärteil. In FIG 14 ist die Wicklung 9 als Strang U eines Motors bezeichnet. Weitere Motorstränge (z.B. V und W) sind durch gleich aufgebaute Primärteile 4 realisierbar, jedoch nicht dargestellt. In der dargestellten Position erzeugen die Permanentmagnete 28 und 30 die magnetischen Erregerflüsse 86, deren Summe die Flussverkettung $\psi$ der Spule 9 bildet. Wie aus der Darstellung in FIG 14 ersichtlich ist, bilden die magnetischen Erregerflüsse 86, welche einen Nutzfluss darstellen, einen Längsfluss-Magnetkreis.

Die Darstellung gemäß FIG 15 zeigt einen Linearmotor 2 mit einem Längsfluss-Magnetkreis. Dieser entspricht der Darstellung gemäß FIG 14. In FIG 15 ist zusätzlich die Verteilung der weiteren magnetischen Felder 92 in einer im Bild nach unten versetzten Darstellung dargestellt. Diese weiteren magnetischen Felder 92 sind das magnetische Erregerfeld, welches von den Permanentmagneten 17 hervorgerufen ist.

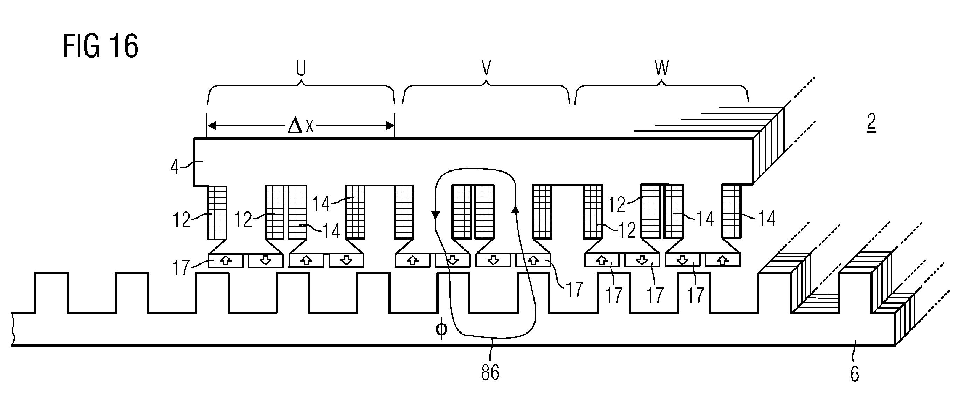

Die Darstellung gemäß FIG 16 zeigt ein weiteres Ausführungsbeispiel für eine elektrische Maschine 2, wobei diese nunmehr mit drei Strängen U, V und W aufbaubar ist. Jeder Strang ist für eine Phase eines Drehstromnetzes vorgesehen. Die erforderliche Phasenverschiebung wird durch den geometrischen Versatz der Stränge untereinander erreicht. Der geometrische Versatz $\Delta x$ entspricht dabei 120° elektrisch für die dargestellte dreisträngige Maschine. FIG 16 unterscheidet sich bezüglich FIG 15 z.B. auch dadurch, dass jedem Strang U, V und W nicht nur eine Zahnspule 9 zugeordnet ist, sondern deren zwei Zahnspulen 12 und 14 für jeweils einen Strang U, V und W.

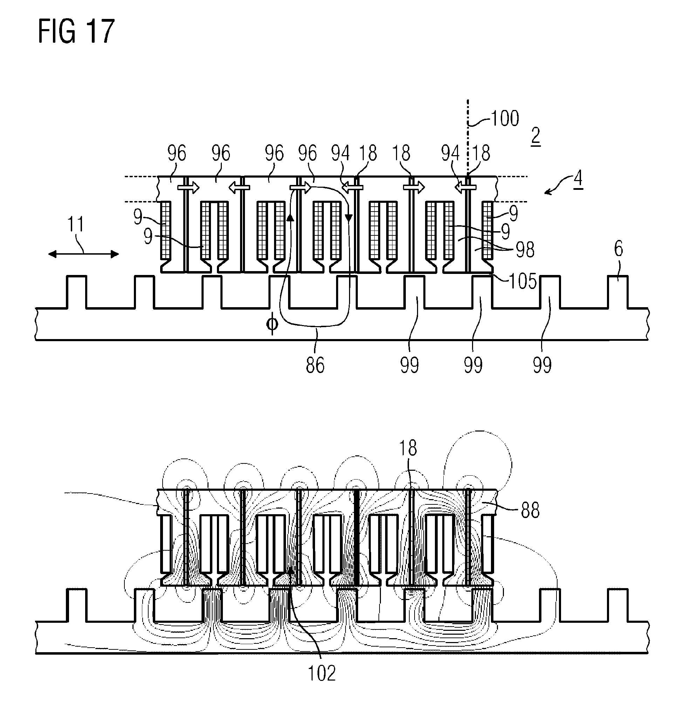

Die Darstellung gemäß FIG 17 zeigt eine elektrische Maschine 2 in Form eines Linearmotors, wobei hier als Permanentmagnete Zahnmagnete 18 verwendet sind. Die Zahnmagnete 18, welche eben auch Permanentmagnete sind, befinden sich zwischen z.B. geblechtem Weicheisenmaterial 96. Das durch die Zahnmagnete 18 erzeugte weitere magnetische Feld 86 ist durch Linien mit Pfeilen gekennzeichnet. Die Magnetisierungsrichtung 94 der Permanentmagnete 18 ist ebenfalls durch Pfeile veranschaulicht. Die Zahnmagnete 18 sind im wesentlichen mittig in einem Zahn 98 positioniert und verlaufen im Wesentlichen parallel zu einer Spulenachse 100 der Zahnspule 9. Der Zahn 98 ist von einer Zahnspule 9 umgeben. FIG 17 zeigt in einer oberen Bildhälfte den geometrischen Aufbau und in einer unteren Bildhälfte den Verlauf des magnetischen Erregerfeldes 88. Das magnetische Erregerfeld 88 ist das weitere magnetische Feld, welches mittels der Zahnmagnete 18 erzeugt ist. Die Darstellung des Erregerfeldes 88 zeigt dabei anschaulich die Wirkung der Flusskonzentration 102. Die Flusskonzentration wird durch die Magnetkreisgeometrie bestimmt. Einflussgrößen sind dabei beispielsweise die Magnetabmessungen und die Blechschnittsabmessungen. Die Magnetisierungsrichtung 94 der Zahnmagnete 18 (der Zahnmagnet ist ein Permanentmagnet) ist hauptsächlich parallel zu einer Luftspaltebene des Luftspaltes 105.

Die Zahnteilung des Sekundärteils 6 der elektrischen Maschine 2 nach FIG 17 ist kein ganzzahliges Vielfaches der Magnetteilung des Primärteils 4. Dies gilt insbesondere für den Mittelwert, falls die Zahn- oder Magnetteilung nicht konstant sind.

Die Spulen 9 sind mit einer und/oder mit mehreren Phasen bestrombar. Die Zuordnung der Spulen zu einzelnen Motorphasen ist vom gewählten Zahnteilungsverhältnis zwischen dem Primärteil 4 und dem Sekundärteil 6 abhängig. Die Darstellung gemäß FIG 17 zeigt bei den Zähnen 98 des Primärteils 4 eine andere Zahnteilung als bei den Zähnen 99 des Sekundärteils 6. Dabei kann eine mehrphasige elektrische Maschine sowohl für eine gleiche als auch für ungleiche Zahnteilung am Primär- und Sekundärteil realisiert werden. Eine gleiche Zahnteilung ist beispielsweise in FIG 12 und FIG 16 dargestellt.

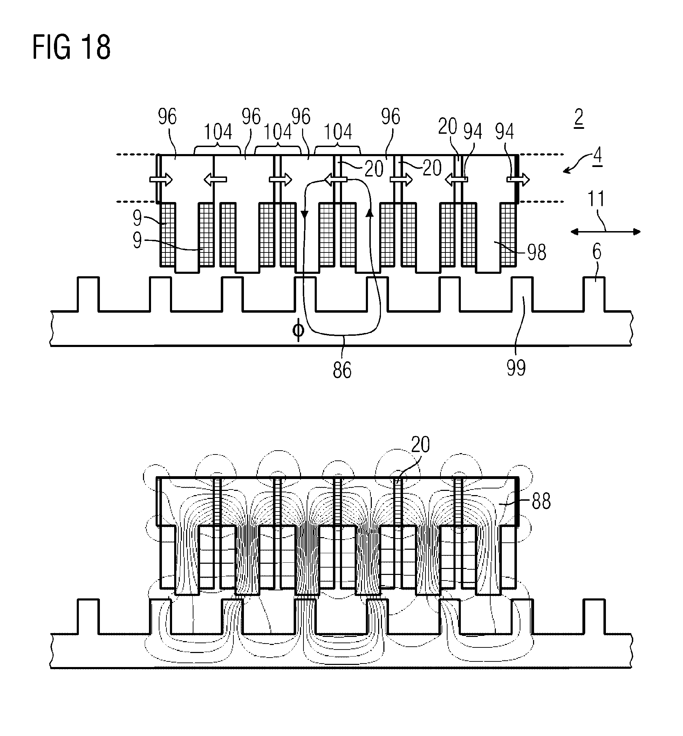

Die Darstellung gemäß FIG 18 unterscheidet sich von der Darstellung gemäß FIG 17 im wesentlichen dadurch, dass anstelle von Zahnmagneten nunmehr Jochmagnete 20 als weiteres Mittel zur Erzeugung weiterer magnetischer Felder verwandt sind. Die Jochmagnete 20 sind auch Permanentmagnete und sind im Bereich eines Joches 104 positioniert. Das Joch 104 dient zur Verbindung von Zähnen 98. Aus der Positionierung der Magnete im Vergleich zu FIG 17 ergibt sich in FIG 18 auch ein anderes Erregerfeld 88.

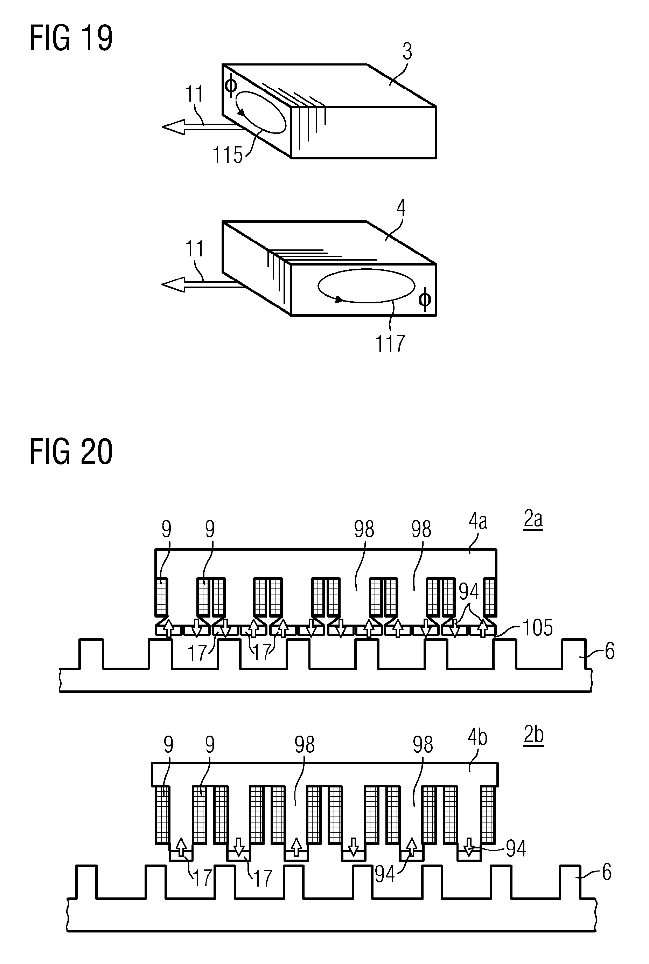

Die Darstellung gemäß FIG 19 zeigt schematisch eine Gegenüberstellung eines Primärteils 3 mit einem Querfluss-Magnetkreis 115 und eines Primärteils 4 mit einem Längsfluss-Magnetkreis 117. Die Primärteile 3,4 sind insbesondere Primärteil 3,4 eines in dieser Figur nicht dargestellten permanenterregten Synchronmotors, welcher Permanentmagnete im Primärteil aufweist, wobei die Permanentmagnete ebenfalls in dieser Figur nicht dargestellt sind. Der magnetische Fluss Φ ist jeweils nur symbolisch aufgezeigt. Auch weitere Mittel zur Erzeugung des magnetischen Flusses Φ, wie z.B. bestrombare Wicklungen, sind aus Gründen der besseren Übersichtlichkeit nicht dargestellt. Eine mögliche Bewegungsrichtung 11 ist durch einen Pfeil angegeben. Ein Sekundärteil, welches den jeweiligen Primärteilen 3 und 4 zugeordnet ist, ist in der FIG 19 nicht dargestellt. In der Darstellung ist auch gezeigt, dass bei einer Blechung der Primärteile 3 und 4 die Ausführung dieser von der Ausrichtung des jeweiligen Magnetkreises 115 und 117 abhängt. Bei dem Querfluss-Magnetkreis 115 schließt sich der magnetische Erregerfluss Φ hauptsächlich in einer quer zur Bewegungsrichtung 11 ausgerichteten Ebene. Die zur Blechung des Primärteils 3,4 verwendeten Motorbleche folgen der Flussebene und werden beispielsweise in einer Längsausdehnung des Primärteils 3 gestapelt, wobei die Längsausdehnung die Ausdehnung des Primärteils 3 in der Bewegungsrichtung 11 ist.

Die Darstellung gemäß FIG 20 zeigt eine Gegenüberstellung von elektrischen Maschinen 2a und 2b, wobei beide elektrische Maschinen 2a, 2b Linearmotoren sind. Die elektrische Maschine 2a weist ein Primärteil 4a auf, welches Zähne 98 aufweist, wobei an jeweils einem Zahn 98 Permanentmagnete 17 angebracht sind, welche eine unterschiedliche Magnetisierungsrichtung 94 aufweisen. Die Permanentmagnete 17 sind an der zu einem Luftspalt 105 zugewandten Seite des Primärteils angebracht. Die Magnetisierungsrichtung 94 der Permanentmagnete 17 ist hauptsächlich senkrecht zu einer Luftspaltebene.

Gemäß FIG 20 ist um die Zähne 98 jeweils eine Zahnspule 9 gewickelt. Da nun jeder der Zähne 98 Permanentmagnete 17 mit entgegengesetzten Magnetisierungsrichtungen 94 aufweist, ergibt sich bei einer Bewegung des Primärteils 4a relativ zum Sekundärteil 6 ein magnetischer Wechselfluss. Die elektrische Maschine 2a weist also eine Wechselfluss-Anordnung auf. Mittels der Permanentmagnete 17, welche zur Ausbildung eines (magnetischen) Erregerfeldes dienen wird bei einer Relativbewegung des Sekundärteils 6 zum Primärteil 4a, im Magnetkreis ein magnetischer Wechselfluss erzeugt. Die Magnetisierungsrichtungen 94 der einzelnen Permanentmagnete 17 sind also derartig ausgerichtet, dass durch eine Bewegung des gezahnten Sekundärteils 6 in den spulentragenden Magnetkreisabschnitten des Primärteils 4a ein magnetischer Wechselfluss erzeugt wird.

Auch die elektrische Maschine 2b in FIG 20 weist ein Primärteil 4b auf, welches Zähne 98 aufweist. Im Gegensatz zur elektrischen Maschine 2a weisen die Zähne 98 bei der elektrischen Maschine 2b für jeden Zahn 98 nur einen Permanentmagnet 17 auf. Da der Permanentmagnet 17 eine Magnetisierungsrichtung 94 aufweist, ist jedem Zahn 98 nur eine Magnetisierungsrichtung 94 zugeordnet. Eine elektrische Maschine 2b ist auch derart ausbildbar, dass ein Zahn 98 mehrere Permanentmagnete aufweist, die jedoch bezogen auf einen Zahn 98 die gleiche Magnetisierungsrichtung aufweisen. Diese Ausführungsvariante ist in FIG 20 nicht explizit dargestellt. Bei der elektrischen Maschine 2b wechseln sich mit den Zähnen 98 am Primärteil 4b auch die Magnetisierungsrichtungen 94. Jeder Zahn weist also abwechselnd eine unterschiedliche Magnetisierungsrichtung 94 auf. Da nun die Zähne 98 Permanentmagnete 17 mit entgegengesetzten Magnetisierungsrichtungen 94 aufweisen, ergibt sich bei einer Bewegung des Primärteils 4b relativ zum Sekundärteil 6 ein magnetischer Gleichfluss. Die elektrische Maschine 2b weist also eine Gleichfluss-Anordnung auf. Mittels der Permanentmagnete 17, welche zur Ausbildung eines (magnetischen) Erregerfeldes dienen wird bei einer Relativbewegung des Sekundärteils 6 zum Primärteil 4b, im Magnetkreis ein magnetischer Gleichfluss erzeugt. Die Magnetisierungsrichtungen 94 der einzelnen Permanentmagnete 17 sind bei der elektrischen Maschine 2b in FIG 20 derartig ausgerichtet, dass durch eine Bewegung des gezahnten Sekundärteils 6 in den spulentragenden Magnetkreisabschnitten des Primärteils 4b ein magnetischer Gleichfluss erzeugt wird, wobei der magnetische Gleichfluss seine Richtung nicht wechselt und zwischen einem Maximal- und einem Minimalwert periodisch schwingt.

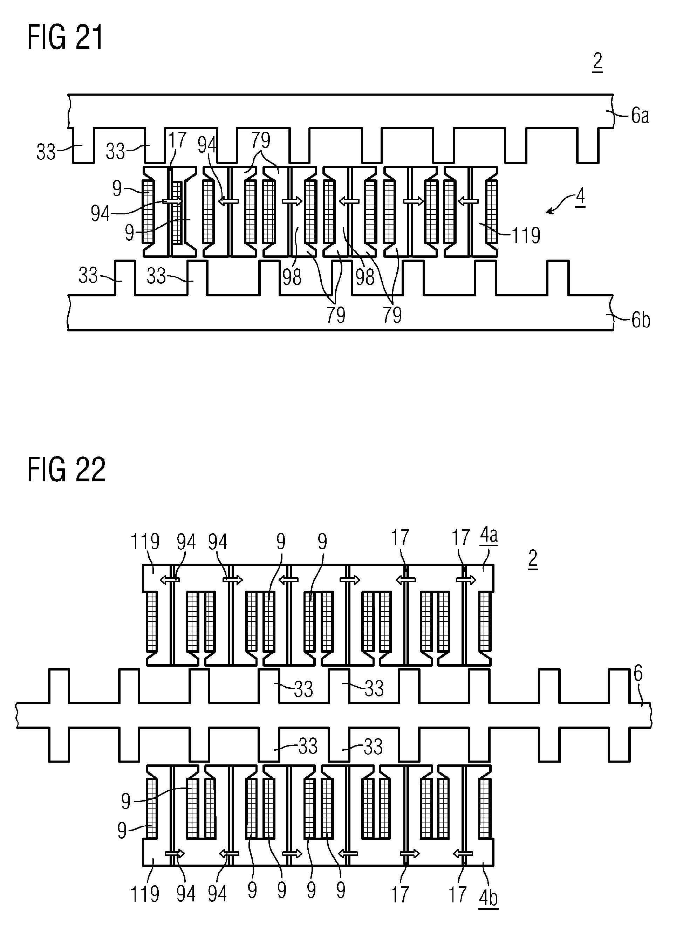

In den Darstellungen gemäß FIG 20 oder auch FIG 17 ist eine Anordnung gewählt, bei welcher eine Kraftwirkung zwischen einem Primärteil und einem Sekundärteil erzielbar ist. Die Darstellung gemäß FIG 21 zeigt eine Anordnung einer elektrischen Maschine welche ein Primärteil 4 und zwei Sekundärteile 6a und 6b aufweist. Eine Kraftwirkung ergibt sich also zwischen nur einem Primärteil 4 und zwei Sekundärteilen 6a und 6b. Hieraus ergibt sich eine annähernde Verdoppelung der erzeugbaren Kraft. Die Zähne 98 des Primärteils 3 des Linearmotors nach FIG 21 weisen jeweils zwei Polschuhe 79 auf, wobei jedem Polschuh 79 ein Sekundärteil 6a oder 6b zugewandt ist. Diese Ausführungsform der elektrischen Maschine 2 nach FIG 21 ist eine Art Weiterbildung der elektrischen Maschine 2 nach FIG 17. Die doppelseitige Anordnung der Sekundärteile ist dabei nicht auf die in FIG 21 dargestellte Ausführungsform des Primärteils 4 beschränkt, bei der die Permanentmagnete 17 in einem weichmagnetischen Material 119 eingebettet sind. Es sind auch Primärteile ausführbar, welche auf den Polschuhen Permanentmagnete aufweisen. Eine derartige Ausführungsform ist jedoch in FIG 21 nicht dargestellt.

Die Darstellung gemäß FIG 22 zeigt eine Anordnung einer elektrischen Maschine 2 welche zwei Primärteile 4a und 4b und nur ein zugeordnetes Sekundärteile 6 aufweist. Eine Kraftwirkung ergibt sich also zwischen nur einem Sekundärteil 6 und zwei Primärteilen 4a und 4b. Hieraus ergibt sich eine annähernde Verdoppelung der erzeugbaren Kraft. Die Zähne 3 des Sekundärteils des Linearmotors 2 nach FIG 21 weisen eine beidseitige Ausrichtung zu jeweils einem Primärteil 4a und 4b auf. Jedem Primärteil 4a und 4b sind also Zähne 33 des einen Sekundärteils 5 zugeordnet. Diese Ausführungsform der elektrischen Maschine 2 nach FIG 22 ist eine Art Weiterbildung der elektrischen Maschine 2 nach FIG 17. Die doppelseitige Anordnung der Primärteile 4a und 4b ist dabei nicht auf die in FIG 21 dargestellte Ausführungsform des Primärteils 4a beschränkt, bei der die Permanentmagnete 17 in einem weichmagnetischen Material 119 eingebettet sind. Es sind auch Primärteile ausführbar, welche beispielsweise wie in FIG 15 auf den Polschuhen Permanentmagnete aufweisen. Eine derartige Ausführungsform ist jedoch in FIG 22 nicht dargestellt.

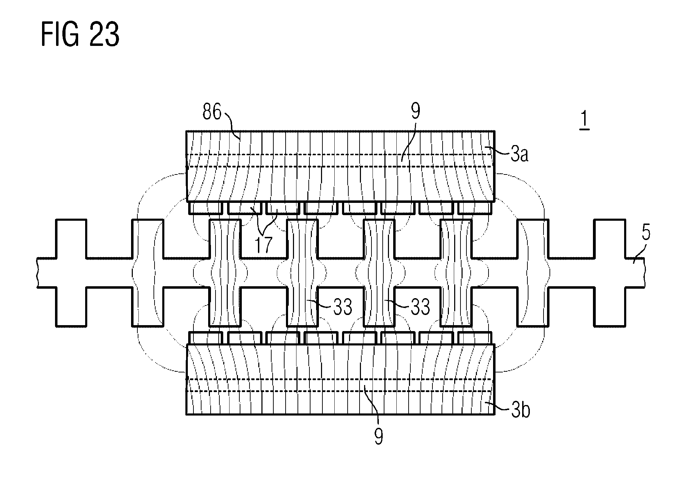

Die Darstellung gemäß FIG 23 zeigt beispielhaft den magnetischen Feldverlauf bei einer elektrischen Maschine 1 welche zwei Primärteile 3a und 3b und ein Sekundärteil 5 aufweist. Die Primärteile 3a und 3b weisen Permanentmagnete 17 und eine Wicklung 9 auf. In der Darstellung nach FIG 23 ist der magnetische Fluss 86 dargestellt, welcher sich durch einen Strom durch die strichliniert dargestellte Wicklung 9 der Primärteile ergibt. Bei dem in FIG 23 dargestellten magnetischen Fluss 86 ist der durch die Permanentmagnete hervorgerufenen magnetische Fluss nicht berücksichtig.

## Patentansprüche

1. Elektrische Maschine (1,2,210), welche insbesondere ein Generator ist, wobei die die elektrische Maschine ein Primärteil (3,4,222,212,213) und ein Sekundärteil (5,6,224) aufweist, wobei die elektrische Maschine (1,2,210) ein scheibenartiges Primärteil (3,4,222,212,213) und ein scheibenartiges Sekundärteil (5,6,224) zur Ausbildung eines scheibenförmigen Luftspalts aufweist, wobei das Primärteil (3,4,212,213) Primärteilsegmente (212,213) aufweist und/oder dass das Sekundärteil (5,6,224) Sekundärteilsegmente (5,6,224) aufweist, wobei die Primärteilsegmente (212,213) Wicklungen (9,10,12,14) aufweisen,
   **dadurch gekennzeichnet, dass** zur Ausbildung des scheibenartigen Primärteils (222) ein für einen Linearmotor verwendbares Primärteil als ein Primärteilsegment (212,213) mit verwandt ist, wobei die Primärteilsegmente (212,213) und/oder die Sekundärteilsegmente (5,6,224) polygonartig angeordnet sind, wobei durch die polygonartige Anordnung eine insbesondere kreisförmige Kontur ausgebildet ist.

2. Elektrische Maschine (1,2,210) nach Anspruch 1,
   **dadurch gekennzeichnet, dass** das Primärteilsegment (212,213) einen eigenen elektrischen Anschluß (220) aufweist, wobei der elektrische Anschluß insbesondere eine Einrichtung zur Ausbildung eines lösbaren elektrischen Kontaktes aufweist.

3. Elektrische Maschine (1,2,210) nach Anspruch 1 oder 2,
   **dadurch gekennzeichnet, dass** das Primärteilsegment (212,213) oder das Sekundärteilsegment (5,6,224) auf einer Trägereinrichtung (214) lösbar befestigt ist.

4. Elektrische Maschine (1,2,210) nach einem der Ansprüche 1 bis 3, **dadurch gekennzeichnet, dass** das Sekundärteil (5,6,224) und/oder das Primärteil (3,4,212,213) eine kreisförmige Kontur aufweisen.

5. Elektrische Maschine (1,2,210) nach einem der Ansprüche 1 oder 4, **dadurch gekennzeichnet, dass** die kreisförmige Kontur des Sekundärteil (5,6,224) mehr einem Kreis angenähert ist als die kreisförmige Kontur des Primärteils (3,4,212,213).

6. Elektrische Maschine (1,2,210) nach einem der Ansprüche 1 bis 5, **dadurch gekennzeichnet, dass** das Primärteilsegment (212,213) ein Blechpaket aufweist, wobei das Blechpaket Nuten zur Aufnahme der Wicklungen aufweist, wobei die Nuten insbesondere parallel zueinander angeordnet sind.

7. Elektrische Maschine (1,2,210) nach einem der Ansprüche 1 bis 6, **dadurch gekennzeichnet, dass** das Sekundärteil (5,6,224) Permanentmagnete (17, 226) aufweist, welche mit einem Winkelversatz nebeneinander positioniert sind.

8. Elektrische Maschine (1,2,210), nach einem der Ansprüche 1 bis 7, **dadurch gekennzeichnet, dass** diese insbesondere eine Synchronmaschine ist, wobei das Primärteil (3,4,130) Wicklungen als ein erstes Mittel (9,10,12,14) zur Erzeugung eines ersten magnetischen Feldes aufweist und das Sekundärteil (5,6,120) ein Mittel (31,32,33,34,99) zur Führung des magnetischen Feldes aufweist, wobei das Primärteil (3,4,130) zumindest ein weiteres Mittel (17,18,20,27,28,29,30) zur Erzeugung eines weiteren magnetischen Feldes aufweist, wobei insbesondere das erste Mittel (9) zur Erzeugung des ersten magnetischen Feldes derart zu dem weiteren Mitteln (17,18,20,27,28,29,30) zur Erzeugung des weiteren magnetischen Feldes angeordnet ist, dass eine Überlagerung des ersten magnetischen Feldes mit dem weiteren magnetischen Feld ermöglicht ist.

9. Elektrische Maschine (1,2,210) nach Anspruch 8,
   **dadurch gekennzeichnet, dass** das sekundärteilseitige Mittel zur Führung eines magnetischen Feldes eine Zahnstruktur aufweist.

**10.** Elektrische Maschine (1,2,210) nach einem der Ansprüche 1 bis 9, **dadurch gekennzeichnet, dass** eine Führungseinrichtung (214) zur Führung der Primärteilsegmente (212,213) vorgesehen ist.

**11.** Windkraftgenerator (1,2,210),
**dadurch gekennzeichnet, dass** dieser als eine elektrische Maschine (1,2,210) nach einem der Ansprüche 1 bis 10 ausgeführt ist.

**12.** Windkraftgenerator (1,2,210) nach Anspruch 11,
**dadurch gekennzeichnet, dass** dieser in einer Gondel (204) an einem Mast (202) angebracht ist, wobei der Windkraftgenerator derart angebracht ist, dass das Primärteil (3,4,212,213) dem Mast (202) zugewandt ist und das Sekundärteil (5,6,224) dem Mast (202) abgewandt ist.

**13.** Windkraftgenerator (1,2,210) nach Anspruch 11 oder 12,
**dadurch gekennzeichnet, dass** das Primärteil (3,4,212,213) mit der Gondel (204) mechanisch verbunden ist.

**14.** Windkraftgenerator (1,2,210) nach Anspruch 11 oder 12,
**dadurch gekennzeichnet, dass** das Sekundärteil (5,6,224) mit der Gondel (204) mechanisch verbunden ist.

**15.** Windkraftgenerator (1,2,210),
**dadurch gekennzeichnet, dass** der gekoppelte Windkraftgenerator (1,2,210) zumindest zwei Windkraftgeneratoren nach einem der Ansprüche 11 bis 14 aufweist, wobei die Windkraftgeneratoren axial hintereinander angeordnet sind.

**16.** Windkraftanlage (200), welche zumindest einen Flügel (208) aufweist und welche einen Windkraftgenerator (1,2,210) nach einem der Ansprüche 11 oder 14 aufweist,
**dadurch gekennzeichnet, dass** das Sekundärteil (5,6,224) mit dem Flügel (208) mechanisch gekoppelt ist.

**17.** Windkraftanlage (200), welche zumindest einen Flügel (208) aufweist und welche einen Windkraftgenerator (1,2,210) nach einem der Ansprüche 11 oder 14 aufweist,
**dadurch gekennzeichnet, dass** das Primärteil (3,4,222) mit dem Flügel (208) mechanisch gekoppelt ist.


**Claims**

**1.** Electrical machine (1,2,210) which in particular is a generator, with the electrical machine having a primary part (3,4,222,212,213) and a secondary part (5,6,224), wherein the electrical machine (1,2,210) has a primary part (3,4,222,212,213) like a disc and a secondary part (5,6,224) like a disc in order to form an air gap in the form of a disc, wherein the primary part (3,4,212,213) has primary part segments (212,213) and/or the secondary part (5,6,224) has secondary part segments (5,6,224), with the primary part segments (212,213) having windings (9,10,12,14), **characterized in that** a primary part which can be used for a linear motor is also used as a primary part segment (212,213) to form the disclike primary part (222), wherein the primary part segments (212,213) and/or the secondary part segments (5,6,224) are arranged like a polygon, with the arrangement which is like a polygon forming an in particular circular contour.

**2.** Electrical machine (1,2,210) according to Claim 1, **characterized in that** primary part segment (212,213) has its own electrical connection (220) the electrical connection in particular has a device for forming a detachable electrical contact.

**3.** Electrical machine (1,2,210) according to Claim 1 or 2, **characterized in that** the primary part segment (212,213) or the secondary part segment (5,6,224) is detachably mounted on a mounting device (214).

**4.** Electrical machine (1,2,210) according to one of Claims 1 to 3,
**characterized in that** the secondary part (5,6,224) and/or the primary part (3,4,212,213) have/has a circular contour.

**5.** Electrical machine (1,2,210) according to one of Claims 1 or 4,
**characterized in that** the circular contour of the secondary part (5,6,224) approximates more closely to a circle than the circular contour of the primary part (3,4,212,213).

**6.** Electrical machine (1,2,210) according to one of Claims 1 to 5, **characterized in that** the primary part segment (212,213) has a laminated core, with the laminated core having slots for holding the windings, and with the slots in particular being arranged parallel to one another.

**7.** Electrical machine (1,2,210) according to one of Claims 1 to 6,
**characterized in that** the secondary part (5,6,224) has permanent magnets (17,226) which are positioned alongside one another with an angle offset.

**8.** Electrical machine (1,2,210) according to one of Claims 1 to 7,
**characterized in that** this electrical machine is, in particular, a synchronous machine, with the primary part (3,4,130) having windings as a first means (9,10,12,14) for production of a first magnetic field, and with the secondary part (5,6,120) having a means (31,32,33,34,99) for guidance of the magnetic field, with the primary part (3,4,130) having at least one further means (17,18,20,27,28,29,30) for production of a further magnetic field, in particular with the first means (9) for production of the first magnetic field being arranged with respect to the further means (17,18,20,27,28,29,30) for production of the further magnetic field such that it is possible for the further magnetic field to be superimposed on the first magnetic field.

**9.** Electrical machine (1,2,210) according to Claim 8,
**characterized in that** the means on the secondary part side has a tooth structure for guidance of a magnetic field.

**10.** Electrical machine (1,2,210) according to one of Claims 1 to 9,
**characterized in that** a guide device (214) is provided for guidance of the primary part segments (212,213).

**11.** Wind power generator (1,2,210),
**characterized in that** this wind power generator (1,2,210) is in the form of an electrical machine (1,2,210) according to one of Claims 1 to 10.

**12.** Wind power generator (1,2,210) according to Claim 11, **characterized in that** this wind power generator (1,2,210) is fitted in a pod (204) on a mast (202) with the wind power generator being fitted such that the primary part (3,4,212,213) faces the mast (202) and the secondary part (5,6,224) faces away from the mast (202).

**13.** Wind power generator (1,2,210) according to Claim 11 or 12,
**characterized in that** the primary part (3,4,212,213) is mechanically connected to the pod (204).

**14.** Wind power generator (1,2,210) according to Claim 11 or 12,
**characterized in that** the secondary part (5,6,224) is mechanically connected to the pod (204).

**15.** Wind power generator (1,2,210),
**characterized in that** the coupled wind power generator (1,2,210) has at least two wind power generators according to one of Claims 11 to 14, with the wind power generators being arranged axially one behind the other.

**16.** Wind power installation (200), which has at least one blade (208) and has a wind power generator (1,2,210) according to one of Claims 11 or 14,
**characterized in that** the secondary part (5,6,224) is mechanically coupled to the blade (208).

**17.** Wind power installation (200) which has at least one blade (208) and has a wind power generator (1,2,210) according to one of Claims 11 or 14,
**characterized in that** the primary part (3,4,222) is mechanically coupled to the blade (208).

**Revendications**

**1.** Machine (1,2,210) électrique, qui est notamment une génératrice, la machine électrique ayant une partie (3,4,222,212,213) primaire et une partie (5,6,224) secondaire, la machine (1,2,210) électrique ayant une partie (3,4,222,212,213) primaire de type en rondelle et une partie (5,6,224) secondaire de type en rondelle pour la formation d'un entrefer de type en rondelle, la partie (3,4,212,213) primaire ayant des segments (212,213) de partie primaire et/ou la partie (5,6,224) secondaire ayant des segments (5,6,224) de partie secondaire, les segments (212,213) de la partie primaire ayant des enroulements (9,10,12,14),

**caractérisée en ce que**, pour former la partie (222) primaire de type en rondelle, il est utilisé comme segment (212,213) de partie primaire une partie primaire pouvant être utilisée pour un moteur linéaire, les segments (212,213) de la partie primaire et/ou les segments (5,6,224) de la partie secondaire étant disposés en polygone, un contour notamment circulaire étant formé par l'agencement en polygone.

2. Machine (1,2,210) électrique suivant la revendication 1, **caractérisée en ce que** le segment (212,213) de la partie primaire a une borne (220) électrique propre, la borne électrique ayant notamment un dispositif de formation d'un contact électrique amovible.

3. Machine (1,2,210) électrique suivant la revendication 1 ou 2, **caractérisée en ce que** le segment (212,213) de la partie primaire ou le segment (5,6,224) de la partie secondaire est fixé de manière amovible à un dispositif (214) de support.

4. Machine (1,2,210) électrique suivant l'une des revendications 1 à 3, **caractérisée en ce que** la partie (5,6,224) secondaire et/ou la partie (3,4,212,213) primaire ont un contour circulaire.

5. Machine (1,2,210) électrique suivant l'une des revendications 1 ou 4, **caractérisée en ce que** le contour circulaire de la partie (5,6,224) secondaire se rapproche plus d'un cercle que le contour circulaire de la partie (3,4,212,213) primaire.

6. Machine (1,2,210) électrique suivant l'une des revendications 1 à 5, **caractérisée en ce que** le segment (212,213) de la partie primaire a un paquet de tôle, le paquet de tôle ayant des encoches de réception des enroulements, les encoches étant disposées notamment parallèlement entre elles.

7. Machine (1,2,210) électrique suivant l'une des revendications 1 à 6, **caractérisée en ce que** la partie (5,6,224) secondaire a des aimants (17,226) permanents qui sont mis les uns à côté des autres avec un décalage angulaire.

8. Machine (1,2,210) électrique suivant l'une des revendications 1 à 7, **caractérisée en ce que** c'est notamment une machine synchrone, la partie (3,4,130) primaire ayant des enroulements comme premier moyen (9,10,12,14) de production d'un premier champ magnétique et la partie (5,6,120) secondaire ayant un moyen (31,32,33,34,99) de conduite du champ magnétique, la partie (3,4,130) primaire ayant au moins un autre moyen (17,18,20,27,28,29,30) de production d'un autre champ magnétique, dans laquelle notamment le premier moyen (9) de production du premier champ magnétique est disposé par rapport à l'autre moyen (17,18,20,27,28,29,30) de production de l'autre champ magnétique de manière à ce qu'une superposition du premier champ magnétique à l'autre champ magnétique soit possible.

9. Machine (1,2,210) électrique suivant la revendication 8, **caractérisée en ce que** le moyen du côté de la partie secondaire de conduite d'un champ magnétique a une structure à dents.

10. Machine (1,2,210) électrique suivant l'une des revendications 1 à 9, **caractérisée en ce qu'**il est prévu un dispositif (214) de guidage des segments (212,213) de la partie primaire.

11. Génératrice (1,2,210) d'éolienne,
    **caractérisée en ce qu'**elle est réalisée sous la forme d'une machine (1,2,210) électrique suivant l'une des revendications 1 à 10.

12. Génératrice (1,2,210) d'éolienne suivant la revendication 11,
    **caractérisée en ce qu'**elle est mise dans une gondole (204) sur un mât (202), la génératrice d'éolienne étant mise de manière à ce que la partie (3,4,212,213) primaire soit tournée vers le mât (202) et de manière à ce que la partie (5,6,224) secondaire soit à l'opposé du mât (202).

13. Génératrice (1,2,210) d'éolienne suivant la revendication 11 ou 12,
    **caractérisée en ce que** la partie (3,4,212,213) primaire est reliée mécaniquement à la gondole (204).

14. Génératrice (1,2,210) d'éolienne suivant la revendication 11 ou 12,
    **caractérisée en ce que** la partie (5,6,224) secondaire est reliée mécaniquement à la gondole (204).

15. Génératrice (1,2,210) d'éolienne,

**caractérisée en ce que** la génératrice (1,2,210) d'éolienne couplée a au moins deux génératrices d'éolienne suivant l'une des revendications 11 à 14, les génératrices d'éolienne étant disposées les unes derrières autres axialement.

16. Eolienne (200) qui a au moins une aile (208) et qui a une génératrice (1,2,210) d'éolienne suivant l'une des revendications 11 ou 14,
**caractérisée en ce que** la partie (5,6,224) secondaire est couplée mécaniquement à l'aile (208).

17. Eolienne (200) qui a au moins une aile (208) et qui a une génératrice (1,2,210) d'éolienne suivant l'une des revendications 11 ou 14,
**caractérisée en ce que** la partie (3,4,222) primaire est couplée mécaniquement à l'aile (208).

FIG 1

## FIG 2

## FIG 3

FIG 4

FIG 5

FIG 6

FIG 7

**FIG 8**

$$\Psi=\Sigma\phi_{x=0}$$

**FIG 9**

$$\Psi=\Sigma\phi_{x=\tau_M}$$

$x=\tau_M$

# FIG 10

# FIG 11

EP 1 997 214 B1

$$\vec{F} = I \int d\vec{s} \times \vec{B}$$

## FIG 12

## FIG 13

## FIG 14

## FIG 15

FIG 16

EP 1 997 214 B1

FIG 17

FIG 18

FIG 19

FIG 20

## FIG 21

## FIG 22

FIG 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004017497 A1
- DE 19636591 A1
- EP 0627805 A2
- EP 0373987 A1
- US 6087742 A

- DE 19652673 A1
- US 5315159 A
- WO 2006052173 A1
- WO 2005088812 A1